# EUROPEAN PATENT APPLICATION

(11) **EP 2 505 807 A2**
(43) Date of publication of application: **03.10.2012**
(21) Application number: 12173287.9
(22) Date of filing: 23.02.2007
(51) Int. Cl.: F02B 63/04, H01J 7/24, H01J 7/46, H01J 17/26, H01H 47/00, H02K 53/00, H02N 11/00

(54) **Self-sustaining electric-power generator utilizing electrons of low inertial mass to magnify inductive energy**

(30) Priority: 06.03.2006 US 369446
(62) Divisional of application: 07751645.8
(71) Applicant: Levitronics, Inc., Lake Oswego OR 97035 (US)
(72) Inventor: Barbat, William, N., Lake Oswego, OR 97035 (US)
(74) Representative: Freeman, Jacqueline Carol

(57) **Abstract**

Electrical oscillations in a metallic "sending coil" radiate inductive photons toward one or more "energy-magnifying coils" comprised of a photoconductor or doped semiconductor coating a metallic conductor, or comprised of a superconductor. Electrons of low inertial mass in the energy-magnifying coil(s) receive from the sending coil a transverse force having no in-line backforce, which exempts this force from the energy-conservation rule. The low-mass electrons in the energy-magnifying coil(s) receive increased acceleration proportional to normal electron mass divided by the lesser mass. Secondarily radiated inductive-photon energy is magnified proportionally to the electrons' greater acceleration, squared. E.g., the inductive-energy-magnification factor of CdSe photoelectrons with 0.13x normal electron mass is 59x. Magnified inductive-photon energy from the energy-magnifying coil(s) induces oscillating electric energy in one or more metallic "output coil(s)." The electric energy output exceeds energy input if more of the magnified photon-induction energy is directed toward the output coil(s) than is directed as a counter force to the sending coil. After an external energy source initiates the oscillations, feedback from the generated surplus energy makes the device a self-sustaining generator of electric power for useful purposes.

## Description

### Cross Reference to Related Application

This application claims the benefit of prior U.S. Patent Application No. 11/369,446, filed March 6, 2006, which is incorporated herein by reference.

### Field

This disclosure introduces a technical field in which practical electrical energy is created in accordance with the overlooked exception to the energy-conservation rule that Herman von Helmholtz described in his 1847 doctrine on energy conservation: *"If* ... *bodies possess forces which depend upon time and velocity, or which act in directions other than lines which unite each pair of material points, ... then combinations of such bodies are possible in which force may be either lost or gained ad infinitum."* A transverse inductive force qualifies for Helmholtz's *ad infinitum* rule, but this force is not sufficient of itself to cause a greater energy output than input when applied to electrons of normal mass due to their unique charge-to-mass ratio. However, the increased acceleration of conduction electrons of less-than-normal inertial mass, as occurs in photoconductors, doped semiconductors, and superconductors, is proportional to the normal electron mass divided by the low electron mass, and the magnification of harnessable inductive energy is proportional to the greater relative acceleration, squared.

### Background

Magnetic force also satisfies Helmholtz's exemption to the energy-conservation rule because magnetic force is transverse to the force that causes it, and magnetic force is determined by the "relative velocity" (*i.e*., perpendicular to the connecting line) between electric charges. Magnification of magnetic force and energy was demonstrated by E. Leimer (1915) in the coil of a speaker phone and in the coil of a galvanometer when he irradiated a radio antenna-wire with radium. A 10-milligram, linear radium source produced a measured 2.6-fold increase in electrical current in the antenna-wire in comparing inaudible radio reception without radium to audible reception with radium. This represented a (2.6)² = 7× increase in electrical energy flowing through the respective wire coils. The possibility of this enhanced reception being attributed to a person's body holding the unit of radium to the wire was eliminated by Leimer's additional observation that, whenever the orientation of the small radium unit was changed to approximately 30 degrees relative to the wire, the energy enhancement ceased.

Applicant has deduced that Leimer's energy magnification most likely was due to low-mass electrons that were liberated and made conductive in the antenna by alpha radiation, which allowed these special electrons to be given a greater-than-normal acceleration by the received radio-broadcast photons. Applicant has further deduced that such low-mass electrons must have originated in a thin-film coating of cupric oxide (CuO) on the antenna wire. CuO is a dull-black, polycrystalline, semiconducting compound that develops *in situ* on copper and bronze wire in the course of annealing the wire in the presence of air. Such CuO coatings have been observed by Applicant on historical laboratory wire at the Science Museum at Oxford University, U.K., and on copper house wire of that era in the U.S., indicating that CuO coatings were commonplace. In later years, annealing has taken place under conditions that prevent most oxidation. This is followed by acid treatment to remove any remaining oxides, leaving shiny wire.

The same year that the English translation of Leimer's paper appeared in Scientific American, 16-year old Alfred M. Hubbard of Seattle, Washington, reportedly invented a fuelless generator, which he later admitted employed radium. Applicant interprets this as implying that Leimer's energy-magnification was utilized by Hubbard with feedback to make it self-sustaining. Three years later Hubbard publicly demonstrated a relatively advanced fuelless generator that illuminated a 20-watt incandescent bulb (Anon. 1919a). A reputable physics professor from Seattle College, who was intimately familiar with Hubbard's device (but not at liberty to disclose its construction details), vouched for the integrity of the fuelless generator and declared that it was not a storage device, but he did not know why it worked (Anon. 1919b). Because Hubbard initially had no financial means of his own, it is likely the professor had provided Hubbard with the use of the expensive radium initially and thereby witnessed the inventing process in his own laboratory.

Newspaper photos (Anon. 1920a) of a more impressive demonstration of Hubbard's fuelless generator show a device described as 14 inches (36 cm) long and 11 inches (28 cm) in diameter connected by four heavy electrical cables to a 35-horsepower (26 kW) electric motor. The motor reportedly propelled an 18-foot open launch around a lake at a speed of 8 to 10 knots (Anon. 1920b). The event was witnessed by a cautious news reporter who claims to have checked thoroughly for any wires that might have been connected to hidden batteries by lifting the device and motor from the boat. Radioactive-decay energy can be eliminated as the main power source because about 10⁸ times more radium than the entire world's supply would have been needed to equal Hubbard's reported electric energy output of 330 amperes and 124 volts.

Lester J. Hendershot of Pittsburgh, Pennsylvania, reportedly demonstrated a fuelless generator in 1928 that was claimed by Hubbard to be a copy of his own device (1928h). The president of Stout Air Services, William B. Stout, who also designed the Ford Trimotor airplane, reported (1928b): *"The demonstration was very impressive. It was actually uncanny .... The small model appeared to operate exactly as Hendershot explained it did."* Also reportedly attesting to the operability of Hendershot's fuelless generator were Colonel Charles A. Lindbergh and Major Thomas Lanpfiier of the U.S. Air Corps (1928a, *et seq.*), and Lanphier's troops reportedly assembled a working model of the device.

To the Applicant's best knowledge, the only depiction that was made public of the interior components of any of these reported generators consists of a sketchy drawing (Bermann 1928h) of Hubbard's apparatus similar in size to the device shown in his 1919 demonstration. It depicts a complex set of parallel coils measuring 6 inches (15 cm) in length and 4.5 inches (11.4 cm) overall in diameter. Four leads of insulated wire with the insulation peeled back are shown coming out of the end of the device. What those four wires were connected to internally was not shown. Hubbard's description of the internal arrangement of coils in the device generally matches the drawing (Anon. 1920a): "*It is made up of a group of eight electro-magnets, each with primary and secondary windings of copper wire, which are arranged around a large steel core. The core likewise has a single winding. About the entire group of cells is a secondary winding."* Nothing was reported or depicted about how components functioned with each other, or how much radium was used and where the radium was positioned. The only connectors visible on the drawing were between the outer windings of the eight electromagnet coils. Theses connectors show that the direction of the windings alternated between clockwise and counterclockwise on adjacent coils, so that the polarity of each electromagnet would have been opposite to that of its adjacent neighbors.

If the Hubbard and Hendershot devices actually operated as reported, they apparently never attained acceptance or commercial success. Assuming the devices actually worked, their lack of success may have largely been financially based or supply-based, or both, compounded with skepticism from believers in the universal energy-conservation doctrine. How much radium was employed by Hubbard in his larger generator can only be guessed at, but assuming a typical laboratory radium needle containing 10 milligrams of radium was used, this amount would have cost $900 in 1920, dropping to $500 in 1929.

That much radium in a fuelless generator would have cost as much as an inexpensive automobile in the 1920s. Possibly much more radium was used than 10 milligrams.

In 1922, when the Radium Company of America of Pittsburgh, Pennsylvania, reportedly discontinued its work with Hubbard on his invention (1928h), the entire world's supply of radium was only about 250 grams. With the extreme assumption that only 1 milligram of radium was needed per generator, less than 10 percent of a single year's production of autos in the U.S. in the mid-1920s could have been supplied with such generators. Apparently Hendershot had tried to revive the technology by showing that the fuelless generator could extend the range of air flight indefinitely, but his technology never attracted a sponsor from any private, public or philanthropic entity.

U.S. Patent No. 4,835,433 to Brown superficially resembles the drawing of Hubbard's device. Brown's device appears to have the same number and essentially the same general arrangement of wire coils as Hubbard's generator, as nearly as can be understood from the newspaper articles depicting that device. Apparently no information concerning either the Hubbard or Hendershot devices was considered during prosecution of the'433 patent. Brown discusses the conversion of energy of radioactive decay products, principally alpha emissions, to electrical energy by amplifying electrical oscillations in a high-Q L-C circuit irradiated by radioactive materials. *"During the absorption process, each alpha particle will collide with one or more atoms in the conductor knocking electrons from their orbits and imparting some kinetic energy to the electrons in the conductor thereby increasing its conductivity."* (Col. 3, line 68 to col. 4, line 5.) No claim was made by Brown that the device employed a semiconductor or photoconductor that could have provided low-mass electrons for energy magnification.

Brown claimed an output of 23 amps at 400 volts, which is vastly greater than all the decay-energy represented by his reported radioactive content of 1 milligram of radium that was surrounded by weakly radioactive uranium rods and thorium powder. Powdered thorium is highly pyrophoric, so it is typically sealed in a nitrogen atmosphere to prevent spontaneous combustion. In his device Brown reportedly confined the thorium in cardboard without any mention of sealing out air. This condition would have invited a meltdown that could have been misinterpreted as massive out-of-control electrical production.

To the best of the Applicant's knowledge, and as noted, none of the devices summarized above ever was commercially accepted or exploited for any of various possible reasons. To the Applicant's best knowledge, no person other than the Applicant has ever indicated that the presence of cupric oxide on their wires could have provided energy magnification. If Hubbard's device actually did work, certain characteristics of its design are unexplainable by the Applicant, namely the use of four rather than two large electrical cables to connect his device to an electric motor, and the use of alternating polarity instead of single-direction polarity in the orientation of the multiple coils surrounding a central coil. Applicant therefore believes that the specification.herein sets forth original configurations of electrical-energy generators that have no known precedent.

### Summary

To address the needs for electrical generators that are capable of self-generating substantial amounts of electrical power in various environments, and that are portable as well as stationary, apparatus and methods are provided for magnifying an electrical input, and (with feedback) for generating usable electrical power indefinitely without fuel or other external energy source except for starting. The apparatus utilize electrons of low effective mass, which receive greater acceleration than normal electrons in an amount that is inversely proportional to the effective mass. Applicant has determined that effective mass is the same as the electron's true inertial mass. The photon energy that is radiated when an electron is accelerated is proportional the square of the acceleration, so the increase in radiated photon energy from an accelerated low-mass electron over the energy from a normal electron is equal to the inverse square of the effective mass. *E.g.,* the calculated energy magnification provided by photoconducting electrons in cadmium selenide, with an electron effective mass of 0.13, is 59×. The use of a transverse force, that lacks a direct back-force, to accelerate low-mass electrons in an oscillating manner circumvents any equal-and-opposite force that would invoke the application of the energy-conservation law of kinetics and thermodynamics.

The various embodiments of the apparatus, which are configured either to magnify continuously an input of oscillating electric energy, or to serve as a self-sustaining electric generator, employ three principal components: at least one sending coil; at least one energy-magnifying coil comprising a material that produces, in a "condition," low-mass electrons; and at least one output coil. The apparatus desirably also includes means for establishing the condition with respect to the energy-magnifying coil(s). Except where otherwise indicated in the remainder of this text, where the number of coils of a particular type is referred to in the singular, it will be understood that a plurality of coils of the respective type alternatively can be utilized.

Electrical oscillation in the sending coil, which is comprised of a metallic conductor, causes radiation of inductive photons from the sending coil. The energy-magnifying coil is situated relative to the sending coil to receive inductive photons from the sending coil. The inductive photons radiating from electrical oscillations in the sending coil convey a transverse force to the low-mass electrons in the energy-magnifying coil with no direct back-force on the sending coil. The greater-than-normal accelerations that are produced in the low-mass electrons of the energy-magnifying coil produce greater irradiation energy of inductive photons than normal.

The output coil is situated to receive the magnified inductive-photon energy from the energy-magnifying coil. The inductive-photon energy received by the output coil, which is comprised of a metallic conductor, is converted into an oscillating electrical current of normal electrons. In order for the electrical output to exceed the electrical input, the output coil is situated in such a manner that it receives more of the magnified inductive-photon energy than that which is directed back against the sending coil to act as a back-force. This "energy leverage" causes the electrical energy output to exceed the input.

By way of example, the energy-magnifying coil can comprise a superconducting material, wherein the "condition" is a temperature (*e.g*., a cryogenic temperature) at which the superconducting material exhibits superconducting behavior characterized by production of low-mass electrons. By way of another example, the energy-magnifying coil can comprise a photoconductive material, wherein the "condition" is a situation in which the photoconductive material is illuminated by a wavelength of photon radiation sufficient to cause the photoconductive material of the energy-magnifying coil to produce conduction electrons having low *effective* mass. In this latter example, the means for establishing the condition can comprise a photoconduction exciter (*e.g.,* one or more LEDs) situated and configured to illuminate the photoconductive material of the energy-magnifying coil with the wavelength of photon radiation. By way of yet another example, the "condition" is the presence of a particular dopant in a semiconductor that provides a low-mass electron as a charge carrier. Also by way of example, the energy-magnifying coil can comprise a semiconductive element or compound that has been doped with a particular element or compound that makes it conductive of low-mass electrons without illumination by photon radiation other than by ambient photons.

Various apparatus embodiments comprise different respective numbers and arrangements of the principal components. The various embodiments additionally can comprise one or more of circuitry, energizers, shielding, and other components to fulfill the object of providing a self-sustaining source of electrical power for useful purposes.

Also provided are methods for generating an electrical current. In an embodiment of such a method a first coil is energized with an electrical oscillation sufficient to cause the first coil to radiate inductive photons. At least some of the radiated inductive photons from the first coil, called a sending coil, are received by a second coil, called the energy-magnifying coil, comprising a material that produces low-mass electrons. The received inductive photons impart respective transverse forces to the low-mass electrons that cause the low-mass electrons to experience accelerations in the material that are greater than accelerations that otherwise would be experienced by normal free electrons experiencing the transverse forces. Conduction of the accelerated low-mass electrons in the second coil causes the second coil to produce a magnified inductive force. The magnified inductive force is received by a third coil so as to cause the third coil to produce an oscillating electrical output of normal conduction electrons that has greater energy than the initial oscillation. A portion of the oscillating electrical output is directed as feed-back from the third coil to the sending coil so as to provide the electrical oscillation to the sending coil. This portion of the oscillating electrical current directed to the sending coil desirably is sufficient to cause self-sustaining generation of inductive photons by the first coil without an external energy source. The surplus oscillating electrical output from the third coil can be directed to a work loop.

The method further can comprise the step of starting the energization of the first coil to commence generation of the oscillating electrical output. This "starting" step can comprise momentarily exposing the first coil to an external oscillating inductive force or to an external magnetic force that initiates an electrical pulse, for example.

The foregoing and additional features and advantages of the invention will be more readily apparent from the following detailed description, which proceeds with reference to the accompanying drawings.

### Brief Description of the Drawings

FIG. 1(A) is a perspective view schematically depicting a sending coil in relationship to an energy-magnifying coil such that inductive photons from the sending coil propagate to the energy-magnifying coil.
FIG. 1(B) is a schematic end view of the sending coil and energy-magnifying coil of FIG. 1(A), further depicting radiation of inductive photons from the sending coil and respective directions of electron flow in the coils.
FIG. 1(C) is a schematic end view of the sending coil and energy-magnifying coil of FIG. 1(A), further depicting the production of inwardly radiating and outwardly radiating magnified inductive photons from the energy-magnifying coil.
FIG. 2(A) is a perspective view schematically showing an internal output coil coaxially nested inside the energy-magnifying coil to allow efficient induction of the internal output coil by the energy-magnifying coil, wherein the induction current established in the internal output coil is used to power a load connected across the internal output coil.
FIG. 2(B) is a schematic end view of the coils shown in FIG. 2(A), further depicting the greater amount of magnified inductive-photon radiation that is received by the external output coil in comparison to the lesser amount that is directed toward the sending coil to act as a back-force.
FIG. 3 is an electrical schematic diagram of a representative embodiment of a generating apparatus.
FIG. 4 is a schematic end view of a representative embodiment comprising a centrally disposed sending coil surrounded by six energy-magnifying coils each having an axis that is substantially parallel to the axis of the sending coil. A respective internal output coil is coaxially nested inside each energy-magnifying coil, and the energy-magnifying coils are arranged so as to capture substantially all the inductive photons radiating from the sending coil.

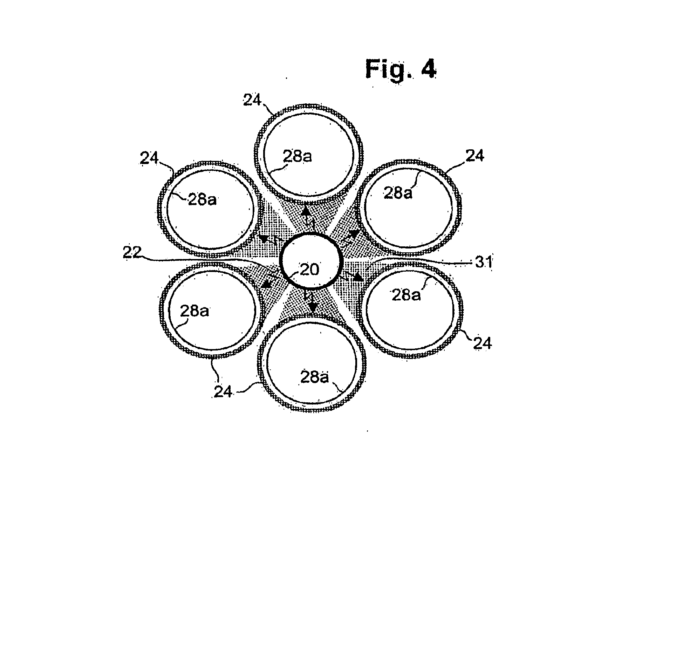

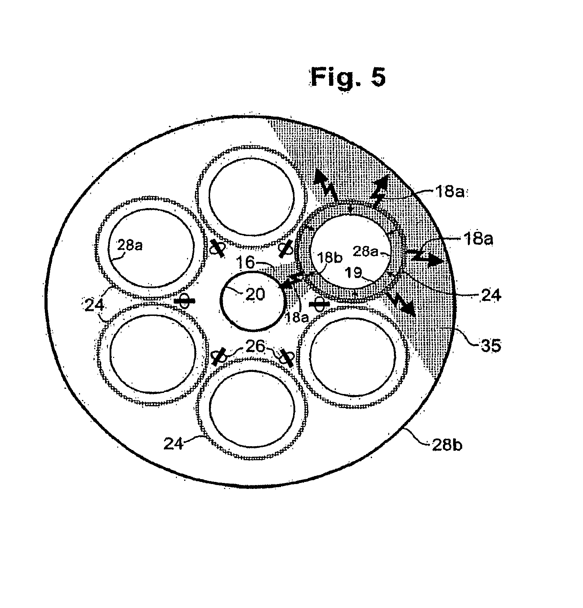

FIG. 5 is a schematic end view of the embodiment of FIG. 4, further including an external output coil situated coaxially with the sending coil and configured to surround all six energy-magnifying coils so as to capture outwardly radiating inductive photons from the energy-magnifying coils. Also depicted is the greater amount of magnified inductive-photon radiation that is received by the internal output coils and the external output coil in comparison to the lesser amount of inductive-photon radiation that is directed toward the sending coil to act as a back-force. Also shown are the arrays ofLEDs used for exciting the energy-magnifying coils to become photoconductive.
FIG. 6 is a perspective view of the embodiment of FIGS. 4 and 5, but further depicting respective intercoil connectors for the energy-magnifying and internal output coils, as well as respective leads for the sending coil, internal output coils, and external output coil.
FIG. 7 is a schematic head-end view schematically depicting exemplary current-flow directions in the sending coil, energy-magnifying coils, internal output coils, and external output coils, as well as in the various intercoil connectors, of the embodiment of FIG. 4.
FIG. 8 is a schematic end view showing an embodiment of the manner in which intercoil connections can be made between adjacent energy-magnifying coils.

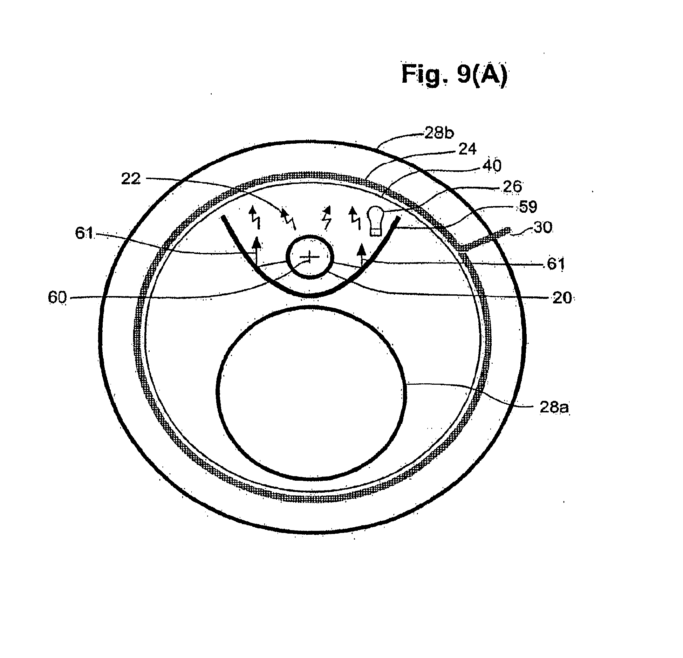

FIG. 9(A) is a schematic end view depicting the coil configuration of an embodiment in which a sending coil and an internal output coil are nested inside an energy-magnifying coil, which is in turn nested inside an exterior output coil. A metallic separator, having a substantially parabolic shape and being situated between the sending coil and the internal output coil, reflects some of the otherwise unused inductive-photon radiation to maximize the effective radiation received by the energy-magnifying coil. Also, the metallic shield prevents the internal output coil from receiving radiation sent from the sending coil.
FIG. 9(B) is a schematic end view of the coil configuration of FIG. 9(A), further depicting the metallic separator acting as a shield to restrict the back-force radiation reaching the sending coil while allowing the internal output coil to receive a substantial portion of the magnified radiation from the energy-magnifying coil. Also depicted is the greater amount of magnified inductive-photon radiation that is received by the internal output coil and the external output coil in comparison to the lesser amount that is received by the sending coil to act as a back-force.
FIG. 10(A) is a schematic end view depicting the coil configuration of yet another embodiment that is similar in some respects to the embodiment of FIG. 4, but also including respective ferromagnetic cores inside the sending coil and internal output coils. Also depicted is a metallic shield surrounding the entire apparatus.
FIG. 10(B) is a schematic end view of a sending coil of yet another embodiment in which a ferromagnetic sleeve is disposed coaxially around the sending coil.

### Detailed Description

### General Technical Considerations

An understanding of how infinite energy mistakenly came to be rejected by the scientific community clarifies the basis of this invention. The electrodynamic function described in the embodiments described later below conforms to Helmholtz's alternate energy rule, which states that a force that is not in-line with its causative force *"may be either lost or gained ad infinitum."* This rule was included in "Über die Erhaltung der Kraft" ("On the Conservation of Force") that Hermann Helmholtz delivered to the Physical Society of Berlin in 1847. But, Helmholtz mistakenly believed that *"all actions in nature are reducible to forces of attraction and repulsion, the intensity of forces depending solely upon the distances between points involved...[so i]t is impossible to obtain an unlimited amount of force capable of doing work as the result of any combination whatsoever of natural objects."*

Helmholtz refused to accept the idea that magnetic energy qualifies for *ad infinitum* status despite the fact that Ampère's (1820) magnetic force on parallel straight conductors is obviously transverse to the direction of the electric currents rather than being in-line with the currents. He omitted mention that the magnetic force in Ampère's (1825) important invention, the solenoidal electromagnet, is caused by currents in the loops of his coils, which are transverse to the direction of magnetic force. Also, he failed to mention that Ampère considered the magnetic force of a permanent magnet to be caused by minute transverse circular currents, which are now recognized as electrons that spin and orbit transversely.

Helmholtz, who was educated as a military medical doctor without any formal study of physics, relied instead on an obsolete metaphysical explanation of magnetic force:
*"Magnetic attraction may be deduced completely from the assumption of two fluids which attract or repel in the inverse ratio of the square of their distance .... It is known that the external effects of a magnet can always be represented by a certain distribution of the magnetic fluids on its surface.*" Without departing from this belief in magnetic fluids, Helmholtz cited Wilhelm Weber's (1846) similarly wrong interpretation that magnetic and inductive forces are directed in the same line as that between the moving electric charges that cause the forces.

Weber had thought that he could unify Coulombic, magnetic, and inductive forces in a single, simple equation, but Weber's flawed magnetic-force term leads to the absurd conclusion that a steady current in a straight wire induces a steady electric current in a parallel wire. Also, a changing current does not induce an electromotive force in-line with the current, as Weber's equation showed. The induced force is offset instead, which becomes more apparent the further that two nested, coaxial coils are separated. What appears to be a directly opposing backforce is actually a reciprocal inductive force.

Helmholtz's assertion that the total sum of the energy in the universe is a fixed amount that is immutable in quantity from eternity to eternity appealed to his young friends. But, the elder scientists of the Physical Society of Berlin declared his paper to be "fantastical speculation" and a "hazardous leap into very speculative metaphysics," so it was rejected for publication in *Annalen der Physik.* Rather than accept this rejection - constructively, Helmholtz found a printer willing to help him self publish his work. Helmholtz headed the publication with a statement that his paper had been read before the Society, but he disingenuously withheld mention of its outright rejection. Unwary readers have since received the wrong impression that his universal energy-conservation rule had received the Society's endorsement rather than its censure.

Helmholtz (1862, 1863) publicized his concept thusly: *"[W]e have been led up to a universal natural law, which...expresses a perfectly general and particularly characteristic property of all natural forces, and which...is to be placed by the side of the laws of the unalterability of mass and the unalterability of the chemical elements."*

Helmholtz (1881) declared that any force that did not conserve energy would be *"in contradiction to Newton's axiom, which established the equality of action and reaction for all natural forces"* [*sic*]. With this deceitful misrepresentation of Newton's strictly mechanical principle, Helmholtz had craftily succeeded in commuting the profound respect for Newton's laws to his unscientific doctrine. Subsequently, the Grand Cross was conferred on Helmholtz by the kings of Sweden and Italy and the President of the French Republic, and he was welcomed by the German Emperor into nobility with the title of "von" added to his name. These prestigious awards made his doctrine virtually unassailable in the scientific community.

Ampère's principle of transverse magnetic attraction and repulsion between electric currents had been made into an equation for the magnetic force between moving electric charges by Carl Frederick Gauss (written in 1835, published posthumously in 1865). The critical part of Gauss's equation shows, and modem physics texts agree, that magnetic force is transverse to the force that imparts a relative velocity (*i.e.,* perpendicular to a connecting line) between charges. Lacking a direct backforce, a transverse magnetic force can produce a greater force than the force that causes it.

The only physicist to recognize in print the profound significance of Gauss's work was James Clerk Maxwell (1873), who stated, *"[If Gauss's formula is correct,] energy might be generated indefinitely in a finite system by physical means.*" Prepossessed with Helmholtz's "law," Maxwell chose not to believe Gauss's transverse magnetic-force equation and accepted Wilhelm Weber's (1846) erroneous in-line formula instead. Maxwell even admitted knowing of Gauss's (1845) rebuke of Weber for his mistaken direction of magnetic force as "*a complete overthrow of Ampère's fundamental formula and the adoption of essentially a different one.*"

In 1893 the critical part of Ampère's formula for magnetic force, which Weber and Maxwell rejected, and which Helmholtz had replaced with his contrary metaphysical explanation, was proposed for the basis for the international measure of electric current, the Ampere (or amp), to be defined in terms of the transverse magnetic force that the current produces. But Helmholtz's doctrine had become so impervious to facts that anyone who challenged this "law" faced defamation and ridicule.

The first recognition of unlimited energy came from Sir Joseph Larmor who reported in 1897, "*[A] single ion e, describing an elliptic orbit under an attraction to a fixed center...must rapidly lose its energy by radiation...[but] in the cases of steady motion it is just this amount that is needed to maintain the permanency of motion in the aether.*" Apparently to mollify critics of his heretical concept, Larmor offered a half-hearted recantation in 1900: *"[T]he energy of orbital groups...would be through time sensibly dissipated by radiation, so that such groups could not be permanent.*"

In 1911 Rutherford found that an atom resembles a small solar system with negative ions moving like planets around a small, positively charged nucleus. These endlessly orbiting electrons were a source of the perpetual radiation that had been aptly described by Larmor, and these orbiting electrons were also Planck's (1911) "harmonic oscillators" that he used to explain Zero-Point Energy (ZPE). ZPE was shown by the fact that helium remains liquid under atmospheric pressure at absolute zero, so that helium must be pressurized to become solid at that temperature. Planck believed that harmonic oscillators derived "dark energy" from the aether to sustain their oscillations, thereby admitting that an infinite source of energy exists. However, he assigned an occult origin to this infinite energy rather than a conventional source that had not met with Helmholtz's approval.

Niels Bohr (1924) was bothered by the notion that radiation from an orbiting electron would quickly drain its energy so that the electron should spiral into the nucleus. Whittaker (1951) states, *"[Bohr and associates] abandoned the principle...that an atom which is emitting or absorbing radiation must be losing or gaining energy. In its place they introduced the notion of virtual radiation, which was propagated in*...*waves but which does not transmit energy or momentum.*" Subsequently the entire scientific community dismissed Larmor radiation as a source of real energy because it failed to conform to Helmholtz's universally accepted doctrine.

Helmholtz's constraining idea that the vast amount of light and heat radiating from the many billions of stars in the universe can only come from previously stored energy has led scientists to concur that fusion of pre-existing hydrogen to helium supplies nearly all the energy that causes light and heat to radiate from the sun and other stars. If so, then the entire universe will become completely dark after the present hydrogen supply in stars is consumed in about 20 billion years. William A. Fowler (1965) believed that essentially all the hydrogen in the universe *"emerged from the first few minutes of the early high temperature, high density stage of the expanding Universe, the so-called 'big bang'*...." Moreover, the background energy of the universe was thought by some to be "relic" radiation from the "Big Bang."

To accept the Big Bang idea that all the stars in the universe originated at the same time, it was necessary to disregard the fact that most stars are much younger or older than the supposed age of the one-time event, which indicates that their energy must have come from a recurring source. The Big Bang is entirely dependent on the idea that the whole universe is expanding, which stemmed from the interpretation that Hubble's red-shift with distance from the light source represents a Doppler shift of receding stars and galaxies. This expanding-universe interpretation was shattered by William G. Tifft (1976, 1977), who found that observed red-shifts are not spread randomly and smoothly over a range of values, as would be expected from the Doppler shifts of a vast number of receding stars and galaxies. Instead, the observed red-shifts all fall on evenly spaced, quantized values.

Moreover, Shpenkov and Kreidik (2002) determined that the radiation temperature corresponding to the fundamental period of the orbital electron motion in the hydrogen atom of 2.7289° K matches the measured temperature of cosmic background radiation of 2.725° ± 0.002° K. This represents perpetual zero-level Larmor radiation from interstellar hydrogen atoms dispersed in the universe. So, Helmholtz's idea that "the energy in the universe is a fixed amount immutable in quantity from eternity to eternity" does not stand up to known facts.

The large aggregate quantity of heat-photons that are generated continually by Larmor radiation can account for the illumination of stars and for the enormous heat and pressure in active galactic centers. Based on the fact that photons exhibit momentum, photons must possess mass because, as Newton explained, momentum is mass times velocity, which in this case is "*c*". Consequently the creation of photons by induction or by Larmor radiation also creates new mass. The conditions that Fowler was seeking for hydrogen nucleosynthesis are apparently being supplied indefinitely in active galaxies and possibly in the sun and other stars above a certain size. This invention utilizes a similar unlimited energy source.

Another principle that is important to this specification is that the transfer of energy by electrical induction was found by the Applicant to work in the same manner as the transfer of energy by the broadcast and reception of oscillating radio signals. A transverse force is communicated in both cases, the force declines similarly with distance, and the effects of shielding and reflection are identical. Since radio signals are communicated by photons, Applicant considers that inductive force is also communicated by photons. The radiation of newly formed inductive photons results when an accelerated charge experiences a change in direction of acceleration. Inductive radiation occurs when the acceleration of electric charges is reversed, as in Röntgen's bremsstrahlung, in Hertz's linear oscillator (plus all other radio-broadcasting antennas), and in all coils that carry an alternating current.

In a similar case, when electric charges move in a curving motion due to a continually changing centripetal acceleration, inductive photons are steadily radiated. This includes the radiation from electrons orbiting atomic nuclei (Larmor radiation) and from conduction electrons flowing in a wire coil, whether the current is steady or not. Circularly produced inductive photons induce a circular motion (diamagnetism) in mobile electrons located near the axis of the electron's circular movement.

In both the reverse-acceleration and centripetal-acceleration cases, inductive photons convey a force to mobile electrons that is transverse to the photon's propagation path. As Lapp and Andrews (1954) reported, "*Low-energy photons produce photoelectrons at right angles to their path....*" This same right-angle force without a direct backforce applies to all conduction electrons that are accelerated by low-energy photons as well. Hence, inductive energy qualifies for exemption from the energy-conservation law by Helmholtz's same *ad infinitum* principle that exempts magnetic energy.

The transverse force that inductively produced photons deliver to mobile electrons is opposite in direction to the simultaneous movement of the primary charge that produces the radiation. This is shown by Faraday's induced current opposite to the inducing current and by the diamagnetically induced circular motion that is opposite in a rotational sense to the circular electron motion in the coil producing it. An oscillating flow of electrons within a loop of a wire coil induces a force in the opposite direction on the conduction electrons in adjacent loops of the same wire, resulting in self-induction.

Important to this specification is the realization that the energy transmitted by photons is kinetic rather than electromagnetic. Inductively radiated photons of low energy, and light rays, and X-rays cannot be deflected by an electric or magnetic field due to the photons' neutral charge. Neither do neutral photons carry with them an electric or magnetic field. Photon radiation is produced by a change in the acceleration of an electric charge, so it has an electrokinetic origin that involves a magnetic force only in special cases. To honor these facts, Applicant uses the term "electrokinetic" spectrum-in place of "electromagnetic" spectrum.

Another principle that is important to this specification is the realization that, although the charge on the electron has a constant value under all conditions, the mass of an electron is not a fixed, unchanging amount. All free electrons, as in cathode rays, have exactly the same amount of mass at subrelativistic velocities, which is called "normal" mass and is denoted by *mₑ.* Free electrons have a unique charge-to-mass ratio that makes the magnetic force resulting from a sub-relativistic velocity imparted to such an electron exactly equal to the force that imparts the velocity, so magnetic energy output is always equal to the energy input with "normal" electrons.

Also, when a normal electron is given a subrelativistic acceleration, the inductive force it produces is equal to the force it receives. The mass of highly conductive electrons of metals is apparently very close to normal, but any very slight inductive-energy gains would be masked by inefficiencies. The ubiquity of free electrons and the conduction electrons of metals has led to the view that electron mass is a never-varying figure that would allow the energy-conservation law to apply to magnetic energy and inductive energy.

Accurate determinations of electron mass in solid materials have been made possible by cyclotron resonance, which is also called diamagnetic resonance. The diamagnetic force produced by the flow of electrons steadily in a wire coil induces the mobile electrons of a semiconductor to move in a circular orbit of indefinite radius but at a definite angular frequency. This frequency is related only to the inductive force and the electron's mass. At the same time, a repulsive magnetic force is developed by the relative velocity between the electron flow in the coil and the conduction electrons, causing the mobile electrons of the semiconductor to move in a helical path away from the coil rather than in planar circles. Only two measurements are needed to determine the mass of such an electron, the cyclotron frequency that resonates with the frequency of the electron's circular motion and the strength of the inductive force, which is determined by the current and dimensions of the coil. Since the co-produced magnetic field is related to the same parameters, its measurement serves as a surrogate for inductive force.

Because the measured mass of conduction electrons in semiconductors is less than normal, a complicated explanation has been adopted to defend the constancy of electron mass in order to support Helmholtz's energy doctrine. An extra force is supposedly received from the vibrational lattice-wave energy of the crystal (in what would have to be an act of self refrigeration) to make normal-mass electrons move faster than expected around a circular path, thereby giving the appearance that the electron has less mass than normal. In this explanation the electron is considered to be a smeared-out wave rather than a particle, which is contradicted by the billiard-ball-like recoil of an electron when it is bumped by a quantum of radiation, as described by Arthur Compton and Samuel Allison (1935).

The fallacy that borrowed energy can provide a boost in velocity to an electron is more apparent in the case of linear motion. The effective-mass theory considers that the greater linear velocity is caused by a boost given to normal-mass electrons by a "longitudinal wave" in the same direction as the electron motion that is imparted by an externally applied force. Since this longitudinal wave also is considered to have a source in crystal-lattice vibrations, the effective-mass theory relies upon a reversal of entropy in violation of the Second Law of Thermodynamics.

No reasonable contribution of direction directional energy can be invoked from any source to impart abnormally great velocity to the conduction electrons in semiconductors. So, the operation of apparatus embodiments described herein relies upon electrons having particle properties and upon electrons having less-than-normal inertial mass without invoking any special forces. This is supported by Brennan's (1999) statement that "*the complicated problem of an electron moving within a crystal under the interaction of a periodic but complicated potential can be reduced to that of a simple free particle but with a modified mass.*" The term "effective mass" (denoted by *m**) was bestowed on sub-normal electron mass to indicate that it is not considered to be true mass. The term "effective" is herein considered redundant in referring to truly inertial mass, but "effective mass" still has relevance in referring to the net movement of orbital vacancies or "holes" in the opposite direction of low-mass electrons.

By *F* = *ma*, a low-mass electron receives greater acceleration and greater velocity from a given force than an electron of normal mass. The velocity and kinetic energy imparted by a force to an electrically charged body are determined by the inertial mass of the body without regard to the charge. In contrast, the magnetic force and magnetic energy produced transversely from the velocity are determined by the electric charge without regard to the body's mass. A smaller amount of mass allows a body to attain greater velocity with a given force. Hence, the magnetic force produced by the charge at this higher velocity will be greater than it would normally be for that same amount of force. This allows low-mass electrons to produce a magnetic force that is greater than the applied force.

Also, the amount of inductive radiation energy from accelerated electrons is related to an electron's charge without regard to its mass. The energy of inductive radiation increases with the square of the electron's acceleration according to Larmor's (1900) equation, while the acceleration is inversely proportional to the lesser electron mass relative to normal electron mass. Therefore, the greater-than-normal acceleration of low-mass electrons allows the re-radiation of magnified inductive-photon energy at a magnification factor that is proportional to the inverse square of the electron's mass. *E.g.,* the inductive-energy magnification factor of cadmium selenide photoelectrons with 0.13 times normal electron mass is (0.13)² = 59×.

Electrons appear to acquire or shed mass from photons in order to fit the constraints of particular orbits around nuclei, because each orbit dictates a very specific electron mass. In metals where the conduction electrons seem to move as a gas, one might think that they would assume the normal mass of free electrons. But, the largest mean free path of electrons in the most conductive metals is reportedly about 100 atomic spacings between collisions (Pops, 1997), so the conduction electrons apparently fall back into orbit from time to time and thereby regain their metal-specific mass values.

As conduction electrons pass from one metal type to another, they either lose or gain heat-photons to adjust their mass to different orbital constraints. In a circuit comprising two different metallic conductors placed in series contact with each other, the flow of conduction electrons in one direction will cause the emission of heat-photons at the junction; while an electron flow in the reverse direction causes cooling as the result of ambient heat-photons being absorbed by the conduction electrons at the junction (Peltier cooling effect). When a metal is joined with a semiconductor whose conductive electrons have much lower mass than in metals, much greater heating or cooling occurs at their junction.

John Bardeen (1941) reported that the (effective) mass of superconducting electrons in low-temperature superconductors is only 10⁻⁴ as great as the mass of normal electrons. This is demonstrated when superconducting electrons are accelerated to a much faster circular velocity than normal in diamagnetically induced eddy currents, which results in enormous magnetic forces that are capable of levitating heavy magnetic objects. Electrons with 10⁻⁴ times normal mass are apparently devoid of (or nearly devoid of) included photon mass, so normal electrons are deduced to possess about 10⁴ times more included photon mass than the bare electron's own mass.

The means by which photon mass may be incorporated within, or ejected from, electrons can be deduced from known information. Based on the Thomson scattering cross-section, the classical radius of a normal electron is 2.8×10⁻¹⁵ cm. If the electron has uniform charge throughout a sphere of that radius, the peripheral velocity would greatly exceed the velocity of light in order to provide the observed magnetic moment. Dehmelt (1989) determined that the radius of the spinning charge that creates an electron's magnetism is approximately 10⁻²⁰ cm. This apparent incongruity can be explained if the electron is considered to be a hollow shell (which is commensurate with the bare electron's tiny mass in comparison to the very large radius) and if the negative charge of the shell is not the source of the magnetic moment.

It has long been known that a photon can be split into a negative ion (electron) and a positive ion (positron), each having the same amount of charge but of opposite sign. Electrons and positrons can recombine into electrically neutral photons, so it is apparent that photons are composed of a positive and a negative ion. Two ions spinning around each other could produce the photon's wave nature. The only size of photon ion that can exist as a separate entity has a charge of exactly plus one or minus one, whereas the ions can have very much larger or very much smaller charge and mass when combined in photons, as long as the two ions are equal in charge and mass. Combined in a photon, the two ions are apparently attracted together so strongly that their individual volumes are very much smaller than as separate entities.

When a dipole photon enters an electron shell, its negative-ion portion is expected to be forced toward the shell's center by Coulombic repulsion, while the photon's positive ion would be attracted by the negative charge of the shell equally in all directions. The negative photon ions would likely merge into a single body at the electron's center while the positive-ion portion would orbit around the centralized negative ion to retain the photon's angular momentum. The high peripheral velocity of this orbiting photon mass would enable portions of photon material to spin off and exit the electron shell at the same velocity that they entered the electron, *i.e.,* the speed of light. The orbiting of the positive photon charge at Dehmelt's small radius most likely accounts for the magnetic moment that is observed in electrons of normal mass.

Liberated low-mass conduction electrons within intrinsic semiconductors (which are also photoconductors by their nature) and within doped semiconductors are mostly protected against acquiring mass from ambient-heat photons by the heat-insulative properties of the semiconductors. In contrast, low-mass electrons injected into heat-conducting metals rapidly acquire mass from ambient-heat photons. Superconducting low-mass electrons of extremely low mass are protected against acquiring mass from ambient-heat photons by the existence of cryogenic conditions, but they are vulnerable to internal heat-photons created by excessive induction.

Conduction electrons of metals typically move as a group at drift velocities of less than one millimeter per second, although the velocity of the electrical effects approaches the velocity of light. (Photons are probably involved in the movement of electrical energy in metallic conductors.) In contrast, conductive low-mass electrons can move individually at great velocities in superconductors and semiconductors. Brennan (1999, p. 631) reports the drift velocity of a particular electron moving in a semiconductor to be one micrometer in about 10 picoseconds, which is equivalent to 100 kilometers per second.

The concentration of the conduction electrons in metals is the same as the number of atoms, whereas in semiconductors the mobile low-mass electrons that are free to move can vary greatly with the amount of certain photon radiation received. Since the magnitude of an electric current is a summation of the number of electrons involved times their respective drift velocities, the current developed by a small ensemble of photoconducting electrons moving at high speed can exceed the current of a much greater number of conduction electrons moving at a very low speed in a metal.

A general feature of intrinsic semiconductors is that they become photoconductive in proportion to the amount of bombardment by some particular electron-liberating frequency (or band of frequencies) of photon energy up to some limit. The amount of bombardment by the particular wavelength (or, equivalently, the frequency) increases along with all other photon wavelengths as the ambient temperature rises, that is, as the area increases under Planck's black-body radiation curve. Consequently, the conductivity of semiconductors continues to increase with temperature, while the conductivity drops almost to zero at low temperature unless superconductivity occurs.

A single high-energy alpha particle can liberate a great number of low-mass electrons in a thin-film semiconductor, as Leimer's (1915) energy-magnifying experiment appears to show. Leimer's alpha radiation was situated near the distant end of a suspended antenna wire of unreported length when he experienced the maximum magnetic energy increase in the coil of the ammeter in the receiver. The low-mass electrons had to have traveled the entire length of the suspended antenna wire and the connecting line to his receiving apparatus without encountering any trapping holes. Assuming these electrons traversed a distance of 1 to 10 meters in less than one-half cycle of the radio frequency (that is, less than 4 microseconds at 128 kHz) at which time the low-mass electrons' direction would have been reversed, this would be equivalent to velocities of 25 to 250 km/sec.

A great number of superconducting electrons can be set in motion by inductive photon radiation. In contrast, inductive photon radiation can pass mostly through photoconductors that have low concentrations of mobile, low-mass electrons. Applicant's interpretation of Leimer's experiment is that the liberated low-mass electrons of the semiconductor-coating of the antenna wire were not directly accelerated by the inductive photons of the radio signal, but rather were accelerated to high velocities by an oscillating electric field created in the metallic wire by the radio photons.

A review of an experiment performed by File and Mills (1963) shows that the very low mass of superconducting electrons is responsible for causing supercurrents to differ from normal electric currents. A superconducting solenoidal coil (comprising a Nb-25% Zr alloy wire below 4.3° K) with the terminals spot-welded together to make a continuous conductor, was employed. Extremely slow declines of induced supercurrents were observed, which can be attributed to an enormous increase in the coil's self-induction. Because a supercurrent approaches its maximum charge asymptotically when charging up, or approaches zero current asymptotically when discharging, a convenient measure of the coil's charging or discharging rate is the "time-constant." The time-constant has the same value for both charging and discharging, and it is defined as (a) the time needed for charging the coil to 63% of the maximum amount of current inducible in the coil by a given diamagnetic force, or (b) the time needed to discharge 63% of the coil's induced current.

In normal conductors, the inductive time-constant is calculated by the inductance of the coil divided by the resistance of the coil. By use of an empirical equation, the inductance of the coil in its non-superconducting state is calculated to be 0.34 Henry based on a double-layered solenoid of 384 turns that measured 4 inches (10 cm) diameter and 10 inches (25 cm) long. The resistance of the 0.020-inch diameter (0.51 mm) wire at T= 5° K (just above *T_{c}*) is estimated, by using data for Zr alone, to be 4×10² ohms. (Resistivity data were not available for Nb or the subject alloy.) Under non-superconducting conditions, the time-constant for charging and discharging this coil is thereby calculated to be approximately 8×10⁻⁵ sec.

The time it took to charge up a supercurrent in the coil in the experiment was not reported. But, based on the reported 50 re-energizings and magnetic determinations performed in 200 hours, the measured charging time in the superconducting state is computed to be no more than 4 hours on average.

Using Bardeen's (1941) *m** = (10⁻⁴)*mₑ* for the order of magnitude of the low-*T_{c}* superconducting electron's mass, and using Larmor's equation (1900), which relates inductive radiation power to the square of the acceleration of the charge, the inductance of the coil is expected to increase by (10⁴)² = 10⁸ times in the superconducting state. Thus, the calculated increase in the time-constant of charging up the supercurrent is (8×10⁻⁵)(10⁸) = 8×10³ seconds, or 2.2 hours, which is the same order of magnitude as the maximum actual charging time. The self-induction increased by that amount because the low-mass electrons are accelerated 10⁴ times faster.

In the case of discharging, the time constant of the supercurrent was projected by File and Mills from measured declines observed over periods of 21 and 37 days. The projections of the two 63% declines agreed closely at 4×10¹² sec (= 1.3×10⁵ years). Therefore, the time-constant of supercurrent discharge, based on projecting actual measurements, had increased by 5×10¹⁶ times over the time-constant for electrons of normal mass.

The driving force during charging had been the applied inductive force, whereas the driving force during discharging was the supercurrent that had been magnified 10⁸ times. Therefore, during the discharging of the supercurrent, the time-constant is increased again by 10⁸ times, so the calculated total increase in the time-constant of discharge is 10⁸ × 10⁸ = 10¹⁶ times greater than the normal time-constant. This calculated value of the non-superconducting time-constant, based solely on the increase of inductive radiation due to extremely low electron mass, compares favorably in magnitude with the actually observed value of 5×10¹⁶ times the normal time-constant.

The superconducting coil required no more than four hours to charge up the supercurrent, yet during subsequent discharge the superconducting coil was projected to radiate inductive photon energy from the centripetal acceleration of the superconducting electrons for 130,000 years before declining by 63%. If this experiment could take place where no energy would be needed to sustain critical cryogenic conditions, as in outer space, the lengthy discharge of this energized coil would clearly demonstrate the creation of energy in the form of newly created photons inductively radiating from the superconducting low-mass electrons that circulate around the coils' loops. Applicant interprets this as showing that low-mass electrons are capable of inductive-energy-magnification based solely on their mass relative to that of normal electrons.

In the embodiments described below, the magnified inductive energy of low-mass electrons is utilized in coils for electric-energy generation by employing a flow of inductively accelerated photons that alternates in direction. This, in turn, drives low-mass electrons in an oscillating manner, so this forced reversal involves only a single stage of inductive-energy magnification rather than the two stages (charging and naturally discharging) in the foregoing experiment.

### Mode of Operation

Inductive photons radiating from an oscillating electric current in a sending conductor (*e.g*., from a radio-wave-broadcasting antenna) convey a force, on conduction electrons in a receiving conductor, that is transverse to the incidence direction of the incident inductive photons on the receiving conductor. As a result, no back-force is transferred directly back to the sending conductor. Applicant has discovered that the action of this transverse force on low-mass electrons in a receiving conductor is analogous to the action of Gauss's transverse magnetic force on free electrons in a conductor, which is not subject to the kinetics law of conservation of energy. If the receiving conductor has low-mass conduction electrons, then this transverse force would impart greater acceleration to the low-mass electrons than imparted by the force to normal free electrons. The resulting greater drift velocities of low-mass electrons than normal free electrons in the receiving conductor would yield an increased magnitude of inductive force produced by the low-mass electrons in the receiving conductor and hence produce a magnification of the irradiation energy of inductive photons.

The direction of the transverse force imparted by the radiated inductive photons on conduction electrons in the receiving conductor is opposite the direction of the corresponding electron flow in the sending conductor. This relationship is similar to the inductive force on electrons in the secondary coil of a transformer, which also is opposite to the direction of flow of electrons in the primary coil.

Various embodiments of Applicant's electrical generator employ inductive photons radiated from electrical oscillations in a "sending coil." Inductive photons are radiated from the sending coil toward an inductive-photon-receiving coil, termed an "energy-magnifying coil," that comprises a photoconductive or superconductive material, or other suitably material as described later below. The energy-magnifying coil is placed in a condition favorable for the production of low-mass electrons that participate in electrical conduction in the energy-magnifying coil. For example, if the energy-magnifying coil is made of photoconductive material, the coil is provided with a photoconduction exciter. Alternatively, if the energy-magnifying coil is made of a superconductor, the energy-magnifying coil is placed in an environment at a temperature (*T*) no greater than the critical temperature (*T_{c}*); *i.e., T<T_{c}.* In the former example, the photoconduction exciter can be a source of illumination that produces an appropriate wavelength of excitive electrokinetic radiation. If the energy-magnifying coil is comprised of a doped semiconductor, the condition that provides mobile low-mass electrons already exists.

In the energy-magnifying coil, the greater-than-normal acceleration of the low-mass electrons produces greater-than-normal inductive forces in the form of greater-than-normal radiation of inductive photons from the coil. The resulting increased inductive-photon energy from the photoconductor or superconductor is converted into useful electrical energy in an output coil inductively coupled to the energy-magnifying coil. The output coil can be made of insulated metallic wire. An exemplary output coil is situated coaxially with and nested within the energy-magnification coil; such an output coil is termed herein an "internal output coil."

The ability of the subject apparatus to produce more energy output than energy input is based on the output coil receiving more of the magnified energy from the energy-magnifying coil than is returned as a back-force from the output coil to the energy-magnifying coil. This principle is termed herein "energy leverage."

The oscillations in the energy-magnifying coil are initiated by an external energy-input source that provides an initiating impulse of electron flow in the sending coil. For example, the external energy-input source can be an adjacent independent electromagnet or an adjacent permanent magnet moved rapidly relative to the sending coil. The initiating impulse commences an oscillation in the sending coil that stimulates radiation of inductive photons from the sending coil to the energy-magnifying coil. Energy from the external energy-input source is magnified by the apparatus so long as the energy-magnifying coil does not act as an independent oscillator at a different frequency. Independent oscillation is desirably avoided by connecting the ends or terminals of the energy-magnifying coil to each other in such a way that it results in one continuous coil, or a continuous multiple-coil system or systems, connected together in such a way that continuity exists for the conduction of low-mass electrons throughout the entire coil system. The energy-magnifying coil inductively creates more energy in the output coil than the energy of the initial impulse. The resulting magnified output of electrical energy produced by the apparatus is available for useful purposes in a work loop.

After initiation the apparatus is made self sustaining using a feed-back loop arranged in parallel with the work loop that includes the sending coil, and with a capacitor located in the feed-back loop to make it an L-C circuit. *I.e.,* after start-up of the apparatus using the external energy-input source, the apparatus becomes self-resonating, which allows the external energy-input source to be decoupled from the apparatus without causing the apparatus to cease production of electrical energy.

During normal self-sustained operation, a portion of the output electrical energy is returned to the sending coil by the feed-back loop, thereby obviating the need to use the external energy-input source for sustaining the oscillations in the sending coil. In other words, after startup the external energy that was used by the sending coil to excite the photoconductive material or the superconducting material in the energy-magnifying coil is replaced by a portion of the output energy produced by the apparatus itself. The remainder of the output electrical energy is available in the work loop for useful purposes.

Initiating the generation of electrical energy by the apparatus takes advantage of the fact that the inductive back-force sent from the output coil to the energy-magnifying coil (and hence ultimately back to the sending coil) arrives at the sending coil one cycle behind the corresponding pulse that initiated the flow of electrons. This one-cycle lag of the backforce, as well as a corresponding one-cycle lag in the feed-back, enables small starting pulses produced in the sending coil to produce progressively greater electrical outputs each successive cycle. Consequently, assuming the electrical load is not excessive during startup, only a relatively few initiating cycles from the external energy-input source typically are needed for achieving production by the apparatus of an amount of output power sufficient for driving the load as well as providing sufficient energy feedback to the sending coil in a sustained manner.

A half-cycle of the one-cycle lag occurs between an initial acceleration of electrons in the sending coil and a corresponding initial oscillation in the energy-magnifying coil. This half-cycle lag occurs because induction photons are not radiated from the initial acceleration of electrons in the sending coil but rather are radiated when the electrons are reverse-accelerated. (Kramers, 1923, and Compton and Allison, 1935, p. 106.) As the newly formed photons are being radiated by the respective deceleration of electrons in the sending coil, even more new photons are being formed simultaneously by the new direction (*i.e.,* reverse direction) of acceleration under oscillating conditions. Thus, the radiation of photons from electrons alfernatingly accelerated in the opposite direction from the conveyed force continues each half-cycle after the initial half-cycle.

Applicant also discovered that a half-cycle lag also occurs between the initial flow of electrons in the primary coil of a certain type of transformer, which is comprised simply of coils nested coaxially rather than being inductively coupled by an iron core, and the resulting electron flow induced in the secondary coil. Applied to the instant apparatus, these findings indicate that a second half-cycle lag occurs between the acceleration of low-mass electrons in the energy-magnifying coil and the corresponding electron flow induced in the output coil. The feed-back from the output coil boosts the electron flow in the sending coil one whole cycle after the initial pulse.

As discussed above, the energy-magnifying coil comprises either a photoconductor, a doped semiconductor, or a superconductor as a source of, and as a conductor of, low-mass electrons. The general configuration of the coil is similar in either case. The coil including a photoconductor or doped semiconductor has an operational advantage at normal temperatures, and the coil including a superconductor has an operational advantage at subcritical temperatures (*T*<*T_{c}*), such as in outer space.

### Representative Embodiments

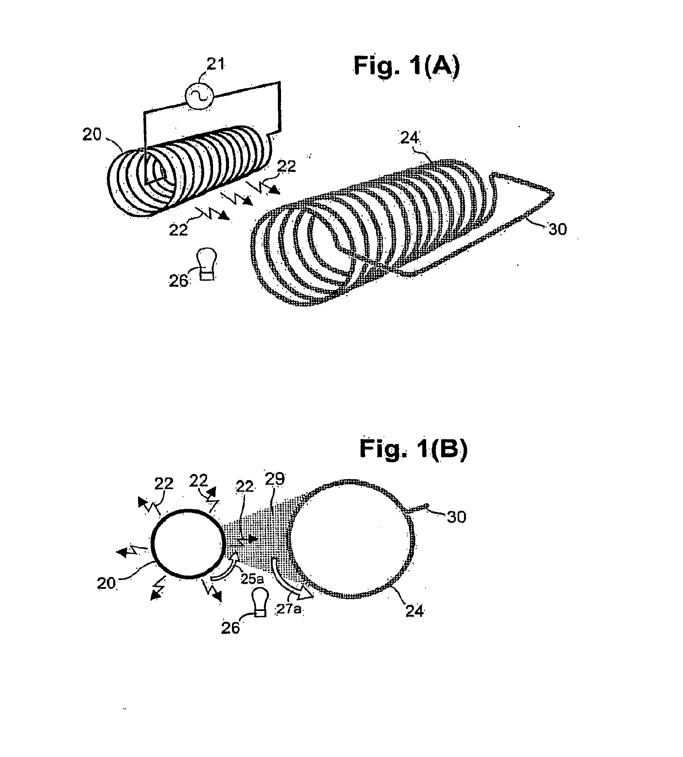

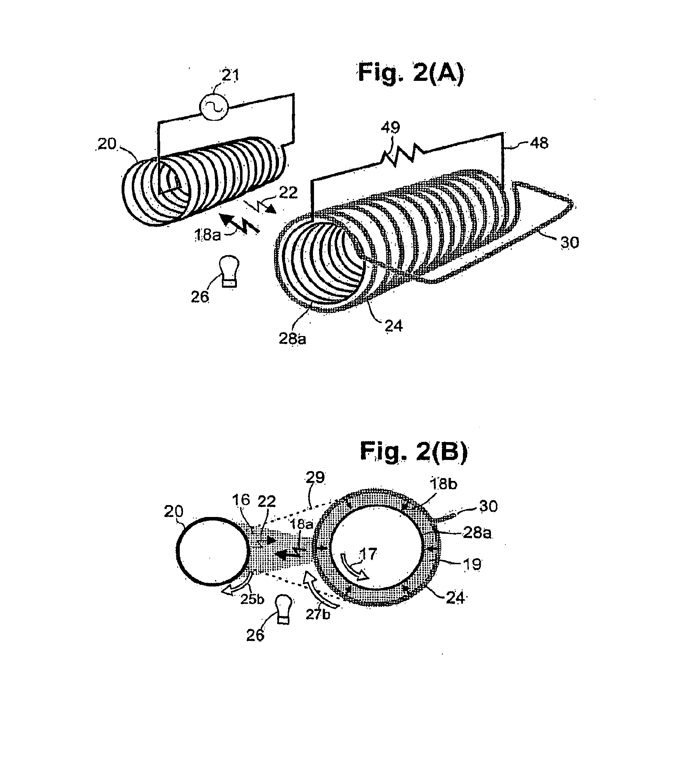

Reference now is made to FIGS. 1(A)-1(C) and 2(A)-2(B) that depict a sending coil 20 connected to a source 21 of alternating current. The sending coil is shown having a desirable cylindrical profile, desirably with a circular cross-section as the most efficient configuration. In FIGS. 1(A)-1(B), electrical oscillations from the source 21 and conducted to the sending coil 20 cause inductive photons 22 to radiate from the sending coil. The radiated photons 22 convey transverse forces in the same manner that a radio-broadcasting antenna transmits oscillating energy. The sending coil 20 can comprise a single layer or multiple layers of insulated metal wire (*e.g.*, insulated copper wire) forming the coil. One layer is sufficient, but an additional layer or layers may increase operational efficiency. If necessary or desired, the turns of wire can be formed on a cylindrical substrate made of a suitable dielectric.

The inductive photons 22 radiating from the sending coil 20 propagate to an energy-magnifying coil 24 that desirably has a cylindrical profile extending parallel to the sending coil. In the embodiment shown in FIGS. 1(A) and 1(B), the energy-magnifying coil 24 does not terminate at the ends, but rather it is constructed with a connector 30 to form a continuous conductor. The energy-magnifying coil 24 desirably is a helical coil made of a material comprising a photoconductive or superconductive material, or other suitable material. If necessary or desired, the energy-magnifying coil can be formed on a substrate that, if used, desirably is transmissive to the inductive-photon radiation produced by the coil.

In an energy-magnifying coil 24 made of a superconducting material, a large population of conductive low-mass electrons is produced in the coil by lowering the temperature of the coil to *T < T_{c},* wherein *T_{c}* is the critical temperature of the particular superconducting material. By way of example, subcritical temperatures are readily available in outer space or are produced under cryogenic conditions.

In an energy-magnifying coil 24 made of a photoconductor material, a large population of conductive low-mass electrons is produced in the coil by illuminating the coil with photons of an appropriate wavelength, such as photons produced by a photoconduction exciter 26. The photoconduction exciter 26 desirably is situated and configured to illuminate substantially at least the same side of the energy-magnifying coil 24 that receives inductive photons 22 radiating directly from the sending coil 20. Alternatively, the photoconduction exciter 26 can be situated and configured to illuminate all sides of the energy-magnifying coil 24. In the depicted embodiment the photoconduction exciter 26 can be at least one incandescent lamp (as shown) energized by conventional circuitry (not shown). Alternatively, the photoconduction exciter 26 can be at least one gas-discharge lamp or one or more light-emitting diodes (LEDs). The wavelength produced by the photoconduction exciter 26 can be, for example, in the infrared (IR), visible, ultraviolet (UV), or X-ray range as required by the particular photoconductive material in the energy-magnifying coil 24. Another possible form of the photoconduction exciter 26 is a source of photons in the gigahertz or the terahertz portion of the electrokinetic spectrum. Other photoconduction exciters are configured, as required, to produce a suitable wavelength from the radio-wave portion of the electrokinetic spectrum. The illumination can be either direct from the photoconduction exciter 26 to the energy-magnifying coil 24 or conveyed from a remotely located photoconduction exciter 26 to the energy-magnifying coil 24 *via* optical fibers, light pipes, or the like.

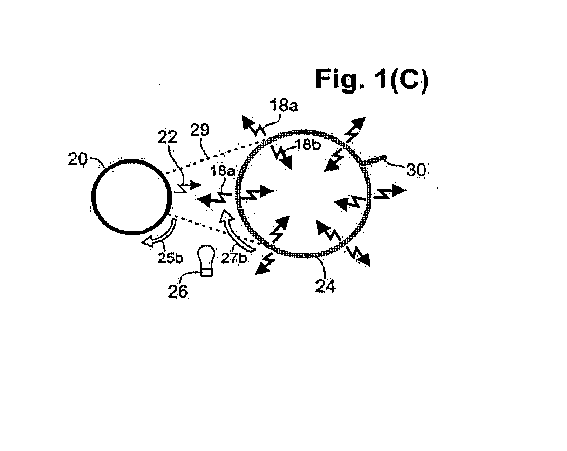

FIGS. 1(B) and 1(C) are respective orthogonal end views of the sending coil 20 and energy-magnifying coil 24 shown in FIG. 1(A), The radiation of inductive photons 22 from the sending coil 20 is indicated schematically in FIGS. 1(A)-1(C) by small, jagged arrows. The forces delivered by the photons 22 to the conductive low-mass electrons in the energy-magnifying coil 24 alternate in directions that are opposite the respective directions of simultaneous electron flow in the sending coil 20. Whenever the particular oscillation phase of electron flow in the sending coil 20 is in the direction of the curved arrow 25a adjacent the sending coil 20 in FIG. 1(B), the resulting transverse photon force causes a flow of low-mass electrons in the energy-magnifying coil 24 depicted by the curved arrow 27a adjacent the energy-magnifying coil 24.

The shaded sector 29 shown in FIG. 1(B) denotes the proportion of inductive-photon radiation 22 from the sending coil 20 actually received by the single energy-magnifying coil 24 shown, compared to the entire 360-degree radiation of inductive photons 22 from the sending coil 20. Aside from a small amount of inductive-photon radiation lost from the ends of the sending coil 20, the relative amount of the total energy of inductive-photon radiation received by the energy-magnifying coil 24 is determined by the angle subtended by the energy-magnifying coil 24, relative to the entire 360 degrees of inductive-photon radiation from the sending coil 20.

In FIG. 1(C) the low-mass conduction electrons of the energy-magnifying coil 24 are accelerated to a higher drift velocity than normal free electrons in the energy-magnifying coil 24 would be. As noted above, the sending coil 20 is energized by alternating electron flow, which causes a periodic reversal of direction of electron flow in the sending coil 20 (compare the direction of the arrow 25b in FIG. 1(C) with the direction of the arrow 25a in FIG. 1(B)). Each reversal of direction of electron flow in the sending coil 20 causes a corresponding reversal in the direction of acceleration of the low-mass electrons in the energy-magnifying coil 24 (compare the direction of the arrow 27b in FIG. 1(C) with the direction of the arrow 27a in FIG. 1(B)). Each such reversal in direction of acceleration causes a corresponding radiation of inductive photons (jagged arrows 18a, 18b) radially outwardly and radially inwardly, respectively, from-the energy-magnifying coil 24. (Note that the arrows 18a, 18b are larger than the arrows denoting the inductive photons 22, indicating the greater energy associated with the photons (arrows 18a, 18b) from the energy-magnifying coil 24 compared to the energy associated with the inductive photons (arrows 22) from the sending coil 20. This symbolically denotes energy magnification.) Note also that, of the magnified inductive-photon energy radiating from the energy-magnifying coil 24, substantially half is directed inwardly (arrows 18b), and substantially the other half is radiated outwardly (arrows 1 8a).

Turning now to FIG. 2(A), the sending coil 20 and energy-magnifying coil 24 are shown. The energy-magnifying coil 24 in FIG. 2(A) includes an internal output coil 28a that desirably is situated coaxially inwardly of, and coextensively with, the energy-magnifying coil 24. A work loop 48 can be connected to the ends of the internal output coil 28a, thereby forming an electrical circuit in which a load 49 is indicated symbolically as a resistor. The internal output coil 28a and the conductors of the work loop 48 desirably are made of insulated metallic (*e.g*., copper) wire.

FIG. 2(B) depicts a transverse section of the coils shown in FIG. 2(A). In FIG. 2(B) the magnified inductive-photon energy (shaded area 19) produced by.the energy-magnifying coil 24 and directed radially inwardly toward the internal output coil 28a induces a corresponding oscillating electron flow in the internal output coil 28a. Thus, the work loop 48 connected across the internal output coil 28a is provided with greater energy than was received by the energy-magnifying coil 24 from the sending coil 20. The direction of the electron flow (arrow 17) in the internal output coil 28a is opposite to the direction of flow (arrow 27b) in the energy-magnifying coil 24, which in turn is opposite to the direction of electron flow 25b in the sending coil 20.

In FIG. 2(B) the annular-shaped shaded area 19 between the energy-magnifying coil 24 and the internal output coil 28a indicates that substantially all the internally directed magnified inductive-photon energy (/.e., approximately half of the total radiation energy) from the energy-magnifying coil 24 is directed to and captured by the internal output coil 28a. In contrast, the shaded sector 16 extending from the energy-magnifying coil 24 to the sending coil 20 indicates that a relatively small proportion of the outwardly directed magnified radiation 18a from the energy-magnifying coil 24 is directed to the sending coil 20 where the radiation provides a corresponding back-force. Aside from the small amount of inductive-photon radiation lost from the ends of the energy-magnifying coil 24, the relative amount of the magnified inductive-photon radiation (sector 16) providing the backforce on the sending coil 20 is a function of the angle subtended by the sector 16, compared to the 360-degree radiation from the energy-magnifying coil 24.

The ratio of magnified energy 18b, from the energy-magnifying coil 24 and received by the internal output coil 28a, to the magnified energy 18a received as a backforce by the sending coil 20 denotes the energy "leverage" achieved by the subject apparatus. If this ratio is greater than unity, then the energy output from the internal output coil 28a exceeds the energy input to the energy-magnifying coil 24. This energy leverage is key to the self-sustained operation of the apparatus, especially whenever the apparatus is being used to drive a load. In other words, with a sufficiently large energy-magnification factor achieved by the energy-magnifying coil 24, the electrical energy available in the work loop 48 exceeds the input energy that produces the oscillations in the sending coil 20. The electric power input to the sending coil 20 thereby produces magnified electric power in the internal output coil 28a that can perform useful work in the work loop 48 while selfpowering continued operation of the apparatus.

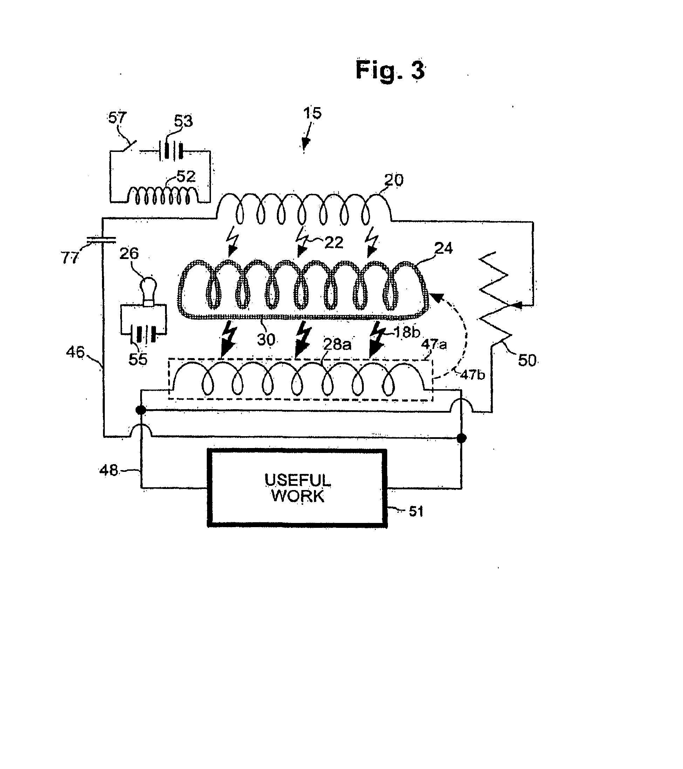

Reference is now made to FIG. 3, which schematically depicts aspects of the apparatus 15 responsible for self-generation of electric power by employing a feed-back ' loop 46. The conductors of the feed-back loop 46 can be made of insulated metallic wire. (In FIG. 3 the dotted lines 47a and dotted arrow 47b indicate that the internal output coil 28a actually is disposed coaxially inside the energy-magnifying coil 24, as described above, but is depicted in the figure outside the energy-magnifying coil for ease of illustration.) The feed-back loop 46 conducts a portion of the electric power from the internal output coil 28a back to the sending coil 20. The remaining portion of the electric power from the internal output coil 28a is directed to the work loop 48 where the power is utilized for useful work 51 (*e.g*., an electrical resistor). The relative proportions of output power delivered to the feed-back loop 46 and to the work loop 4.8 can be varied by adjusting a variable resistor 50.

As noted above, an initial source of electrical energy is used for "starting" the apparatus 15 by initiating an oscillation in the sending coil 20. After starting, under usual operating conditions the apparatus 15 is self-resonant and no longer requires input of energy from the initial source. The particular inductance and distributed capacitance of the sending coil 20 plus all other capacitances and inductances in the apparatus provide a certain corresponding frequency of self-resonating oscillation. In the feed-back loop 46 is a capacitor 77 that makes the apparatus an L-C circuit that oscillates at its own frequency. The frequency can be changed by altering the capacitance or the inductance of the apparatus, or both. The capacitor 77 can be a variable capacitor by which the frequency can be adjusted.

As shown in FIG. 3, the initial source of oscillating electrical energy can be an impulse from an external electromagnet 52 powered by its own energy source (*e.g*., a battery 53 as shown or other dc or ac source). For example, the electromagnet 52 can be placed near the sending coil 20 or other portion of the feed-back loop 46 and energized by a momentary discharge delivered from the battery 53 by a switch 57. The resulting pulse generated in the electromagnet 52 initiates a corresponding electrical pulse in the sending coil 20 that initiates self-sustaining oscillations in the apparatus 15. In another embodiment, the electromagnet 52 can be energized briefly by an ac source (not shown). In yet another embodiment, the initial source can be a permanent magnet that is moved rapidly (either mechanically or manually) near the sending coil 20 or other portion of the feed-back circuitry. In any event, the pulse provided by the initial source initiates electrical oscillations in the sending coil 20 that produce corresponding oscillating inductive-photon radiation 22 from the sending coil 20, as shown schematically in FIG. 3 by thin, jagged arrows. The inductive-photon radiation 22 from the sending coil 20 causes, in turn, re-radiation of magnified inductive-photon energy 18b from low-mass electrons in the energy-magnifying coil 24, as shown schematically in FIG. 3 by thick, jagged arrows. FIG. 3 depicts a photoconductive energy-magnifying coil 24 that is illuminated meanwhile by an incandescent photoconduction exciter 26 energized by a respective power source 55 (*e.g.,* an externally connected battery as shown).

A sufficiently high energy-magnification factor of the apparatus 15 allows the magnified energy from the energy-magnifying coil 24 to induce greater energy in the internal output coil 28a than the energy of the corresponding initial impulse. A portion of the magnified electrical energy is returned to the sending coil 20 *via* the feed-back loop 46 to sustain the oscillations.

The remaining, surplus energy from the internal output coil 28a is available for application to useful work *via* the work loop 48. In one embodiment some of this useful work can be used for illuminating the photoconduction exciter 26 (circuitry not shown) in an apparatus configuration in which the energy-magnifying coil 24 comprises a photoconductor. In another embodiment some of this useful work can be used for maintaining cryogenic (*T<T_{c}*) conditions for an apparatus configuration in which the energy-magnifying coil 24 comprises a superconductor.

After starting oscillations in the apparatus 15, electron flow builds up rapidly so long as the load 49 does not draw off too much of the output energy during startup. Upon reaching operational equilibrium, the output of electrical power from the apparatus 15 is a rapidly alternating current (ac). The ac output can be rectified by conventional means to produce direct current (dc), and the output can be regulated using conventional means as required. Many variations of conventional circuitry are possible, such as, but not limited to, automatic voltage controllers, current controllers, solenoidal switches, transformers, and rectifiers.

Regarding the energy-magnifying coil 24, an exemplary embodiment can be made from a low-*T_{c}* superconductor such as commercially available, flexible, niobium-zirconium wire that can be formed readily into a coil. Other embodiments, as noted above, of the energy-magnifying coil 24 can be made using a photoconductive material or a high-*T_{c}* superconductor. Most high-*T_{c}* superconductors (and some photoconductors) have ceramic-like properties and thus require application of special methods for forming the material into a cylindrical coil having electrical continuity throughout. Some commercially available high-*T_{c}* superconductors are available in ribbon or tape form. The energy-magnifying coil 24 can be free-standing or supported on a rigid substrate.

By way of example, an energy-magnifying coil 24 can be made from a ribbon of flexible photoconductive material such as the material discussed in U.S. Patent no. 6,310,281, incorporated herein by reference. Briefly, a layer of stress-compliant metal is placed on a plastic ribbon. Then, the photoconductive material is deposited on both sides of the metal-covered ribbon and the edges of the ribbon so that the metal coats the ribbon all the way around. Such a configuration would allow low-mass electrons in the photoconductive material to receive energy from inductive photons emitted from the sending coil 20 on one side of the ribbon while re-radiating magnified energy from both sides of the ribbon.

In another example a flexible photoconductor ribbon is made from a flexible organic polymer having photoconductive properties. (High electrical conductivity observed in photoconductive polymers is attributed to the presence of low-mass electrons in the material.) The flexible, photoconductive ribbon can be wound on a dielectric tubular support to form the energy-magnifying coil 24.

In yet another example, a thick-film coating of photoconductive cadmium sulfide or cadmium selenide is formed on a wire coil by sintering a paste, which comprises a powder of finely ground CdS or CdSe crystals mixed with water and at least a fluidizer such as cadmium chloride, at a temperature of 550 °C to 600 °C in a controlled atmosphere. During sintering the boundaries of the small crystals become melted with the heated fluidizer, allowing the crystals to regrow together and solidify when the fluidizer evaporates and the sintered coating is cooled. Alternatively, copper oxides are formed in place on bare copper or bronze wire by heating the wire above about 260 °C in an oxygen atmosphere, or by application of chemical oxidants.

In yet another example, a coil of a ceramic-like superconductor or photoconductor is made by tape-casting, extruding, slip-casting, cold- or hot-pressing, or coating of the material as a thin film arranged helically on a tubular dielectric substrate. The assembly is heat-treated in a controlled-atmosphere furnace to increase intercrystalline contacts. Alternatively, the thin film of superconductor or photoconductor is formed over the entire exterior of the dielectric substrate, followed by removal of selected portions of the superconductor or photoconductor to form the desired helical coil.

In some photoconductors and doped semiconductors, only a small portion of a population of inductive photons irradiated on the material impact with, and yield acceleration of, low-mass electrons in the material. This is due to a low density of photoconductive low-mass electrons in the material. In such a case, inductive-photon radiation passing through the material can be captured efficiently by normal free conduction electrons in a metallic strip that desirably is in immediate contact with, or embedded in, the material. The acceleration of normal free electrons in the metallic conductor sets up an electric field that assists in accelerating the low-mass photoelectrons. In this configuration, it is desirable that the photoconductive material be disposed completely over and around the metallic strip so that the photoconductor faces both outwardly and inwardly, with both sides of the photoconductor or doped semiconductor being in electrical contact with each other.

One factor in the choice of photoconductor material to use in forming the energy-magnifying coil 24 is the potential magnification of energy that can be realized by low-mass electrons of an n-type or p-type photoconductive material. Other important factors are the quantity of low-mass electrons that are available in the photoconductive material for a given amount of illumination and the actual electrical conductance of the material. Standard illumination-sensitivity measurements provide a general overall index of the ability of a photoconductor to serve effectively in magnifying energy.

Cadmium sulfide and cadmium selenide, the most common photoconductive compounds that are commercially available, have calculated magnification factors of 37 and 59, respectively. The peak response wavelength of cadmium sulfide is 515 nanometers (in the green part of the visible spectrum) and of cadmium selenide is 730 nanometers (in the near-infrared part of the spectrum). Cadmium sulfide can be mixed with cadmium selenide under certain conditions, so the resulting mixture assumes photoconductive characteristics that are intermediate the respective photoconductivities of the individual compounds. Mixtures can thereby be produced having peak wavelengths that are matched to wavelengths of commercially available LEDs of many sizes and illumination intensities. Some semiconductors that become photoconductive at a wavelength smaller than the wavelength produced by currently available LEDs can be made conductive of low-mass electrons merely by heating. Applicant has found that gallium arsenide develops considerably higher conductivity than copper or silver at a temperature of 100 °C, and that the conductive electrons are low-mass. Also, alpha radiation is capable of liberating many low-mass electrons in some semiconductors. A second electron of comparatively low mass may have been liberated from cupric oxide by alpha radiation along with the outer copper electron in Leimer's (1915) experiments, since the measured energy magnification exceeded the magnification calculated from cyclotron resonance of CuO, which most likely pertains only to the mass of the outer electron.

Dopants can be added to a semiconductor to make it more conductive of low-mass electrons without illumination. Also, the illumination-sensitivity and conductivity of cadmium sulfide are increased by adding small amounts of donor-type dopants such as, but not limited to, sulfides, selenides, tellurides, arsenides, antimonides, and phosphides of the Type-IIIa elements: aluminum, gallium, indium, and thallium. In this regard, the photoconductors of high-sensitivity photovoltaic cells may comprise as many as five different compounds. The actual mixtures of photoconductive compounds and dopants used in commercially available photovoltaic cells often are trade secrets. But, the sensitivities and conductances of the cells usually are given or are measurable, and this data can be used advantageously in selecting a particular photoconductive compound for use in the apparatus.

Other photoconductive compounds or elements can be employed in energy-magnifying coils. For example, the conduction electrons of silicon have an energy-magnification factor of 15x. Photoconductors having very high magnification factors include, but are not limited to, gallium arsenide, indium phosphide, gallium antimonide, cadmium-tin arsenide, and cadmium arsenide, which have calculated energy-magnification factors ranging between 200× and 500×, and mercury selenide (1100×), indium arsenide (2000×), mercury telluride (3400×), and indium antimonide (5100×).

The depth of optical transmission largely determines the optimum thickness of photoconductive films for energy-magnifying coils. For example, the highest optical transmission of sintered CdS is reported to be 20 micrometers, but since the average grain size increases (and the average porosity decreases) with an increase in film thickness, the maximum conductivity of a sintered film is at a thickness of 35 micrometers (J.S. Lee *et al.,* 1987).

The metal chosen to be embedded must not react chemically with the photoconductor. For example, aluminum reacts with gallium arsenide (GaAs) in an electrical environment to change the conductive character of both the GaAs and the aluminum. Gold, platinum, and palladium can serve in many cases because these materials are relatively inert chemically. Gold combines chemically with tellurium, however, so gold is not suitable for embedding in mercury telluride. Cadmium plating over a common metal serves to alleviate the reactivity in cases where cadmium sulfide or cadmium selenide is used as the photoconductor.

The discussion above has been, for ease of explanation, in the context of the apparatus including one energy-magnifying coil 24. However, as discussed, use of a single energy-magnifying coil 24 to capture inductive photons from the sending coil 20 results in loss (by non-capture) of most of the inductive photons from the sending coil 20. This proportion of captured inductive photons can be increased greatly in an embodiment in which multiple energy-magnifying coils 24 are arrayed around the sending coil 20, such as shown in FIG. 4. In the embodiment of FIG. 4, the energy-magnifying coils 24 substantially completely surround the sending coil 20, and (although six energy-magnifying coils 24 are shown) as few as three energy-magnifying coils 24 of adequate diameter still could substantially completely surround the sending coil 20. There is no limit, except as possibly related to packaging concerns, to the maximal number of energy-magnifying coils 24 that could be used. The depicted configuration (FIG. 4) has a desirable number of six energy-magnifying coils 24. In FIG. 4 the shaded sectors 31, considered collectively, illustrate that nearly all 360 degrees of inductive-photon radiation 22 from the sending coil 20 are received by the energy-magnifying coils 24. Not shown in FIG. 4 are photoconduction exciters (items 26 in FIG. 3) used for illuminating respective portions of the energy-magnifying coils 24 in a photoconductive form of the apparatus 15.

FIG. 4 also depicts respective internal output coils 28a nested coaxially and coextensively inside each of the energy-magnifying coils 24. As discussed earlier, each internal output coil 28a receives nearly all the inductive-photon radiation propagating radially inwardly from the respective energy-magnifying coil 24. Desirably, the overall energy output of the embodiment of FIG. 4 can be increased by surrounding the array of energy-magnifying coils 24 with an external output coil 28b, of which the conductors desirably are made of insulated metallic wire (FIG. 5). In this embodiment approximately half the outwardly propagating, magnified inductive-photon radiation (large arrows 18) from each energy-magnifying coil 24 (one such coil is highlighted in FIG. 5) is received by the external output coil 28b. This captured radiation is denoted by the shaded sector 35. When this externally directed inductive radiation captured from all the energy-magnifying coils 24 is added to all the inwardly directed radiation captured from the energy-magnifying coils 24 by their respective internal output coils 28a (shaded areas 19), the total energy received by the output coils 28a, 28b greatly exceeds the back-force energy directed by the energy-magnifying coils 24 toward the sending coil 20 (the back-force energy from one energy-magnifying coil 24 is shown as the shaded sector 16). Thus, the resulting energy "leverage" exhibited by the apparatus is increased substantially by including the external output coil 28b.

The embodiment of FIG. 5 also includes respective arrays (viewed endwise) of light-emitting diodes (LEDs) collectively serving as photoconduction exciters 26 for the energy-magnifying coils 24. The LED arrays are arranged back-to-back and disposed between adjacent energy-magnifying coils 24. Each array in FIG. 5 can comprise multiple LEDs or as few as one LED.

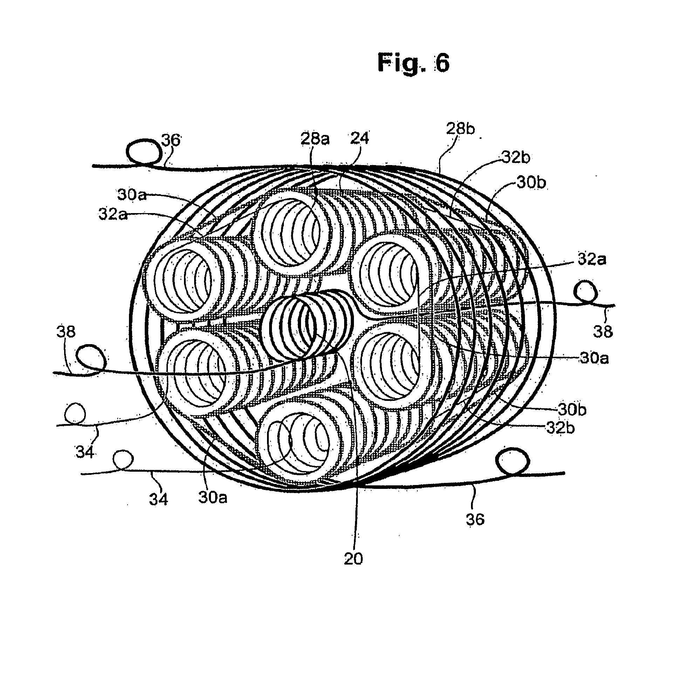

FIG. 6 provides a perspective.view of an apparatus 15 having an arrangement of coils similar to the arrangement shown in FIG. 5. In FIG. 6 each energy-magnifying coil 24 comprises a helical coil of superconductive or photoconductive material in wire or ribbon (tape-like) form.

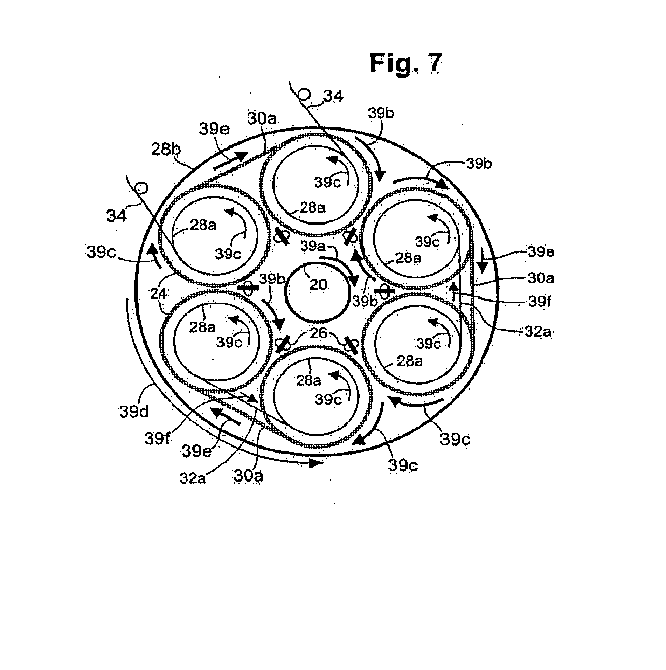

Whenever multiple energy-magnifying coils 24 are used, the respective directions of electron flow in them desirably occur in the same circular direction as viewed endwise. Thus, the flow of electrons in all the energy-magnifying coils 24 is clockwise during one phase of an oscillation cycle and counterclockwise during the other phase. The same principle applies to the flow of electrons in the output coils 28a, 28b. (But, in such an embodiment, the flow of electrons in the output coils 28a, 28b is in the opposite direction to the electron flow in the energy-magnifying coils 24.) These relationships of electron flow in the coils during a particular phase of an oscillation cycle are shown in FIG. 7.

The energy-magnifying coils 24 desirably are connected together in series, using intercoil connectors 30a, 30b to maintain the same direction of electron flow, which can be clockwise or counter-clockwise (as viewed from one end of such a coil). This direction of electron flow in a coil is termed the "handedness" of the coil. If the energy-magnifying coils 24 all have the same handedness, then the termini of adjacent energy-magnifying coils 24 are connected together in a head-to-foot manner progressively in one direction around the group of coils (not shown). ("Head" refers to the forward-facing end, and "foot" refers to the rearward-facing end of the apparatus in relation to the viewer.) In this case the intercoil connectors 30a, 30b must pass either completely through the apparatus or around the outside of the apparatus for its entire length, which reduces efficiency and can cause undesirable wear if the connectors are subjected to vibrations. A more desirable arrangement is depicted in FIG. 6, in which short intercoil connectors 30a cross directly head-to-head between one energy-magnifying coil 24 and an adjacent energy-magnifying coil 24, and short intercoil connectors 30b cross over directly foot-to-foot in the next energy-magnifying coils 24. In this configuration the handedness of turns of the energy-magnifying coils 24 alternates from right-to-left to left-to-right in adjacent energy-magnifying coils 24. In the same manner as a right-handed screw advances from head to foot as it is turned clockwise, and a left-handed screw advances in the opposite direction as it is turned clockwise, clockwise electron flow in a right-handed coil advances from head to foot, and clockwise electron flow in a left-handed coil advances from foot to head in a left-handed coil.

The single-layered internal output coils 28a in FIG. 6 present the same situation in which these coils are connected in series. Desirably, the intercoil connectors 32a cross over directly from one internal output coil 28a to the adjacent internal output coil 28a head-to-head, and the intercoil connectors 32b cross over directly foot-to-foot from one internal output coil 28a to the adjacent internal output coil 28a. This same handedness convention generally applies to all series-connected internal output coils 28a connected in this manner. The head-to-head intercoil connectors 32a and foot-to-foot intercoil connectors 32b for the internal output coils 28a need not coincide with the same respective connectors 30a, 30b for the energy-magnifying coils 24.

In another embodiment (not shown), each internal output coil is two-layered, with both leads at either the head or foot. Such a configuration allows for short and direct connections between adjacent internal output coils. Multiple-layered internal output coils may be more efficient, but the extra layers of coiled wire increase the mass of the apparatus, which may be a concern in mobile applications. Multiple wire layers carrying high current also may result in overheating, which may require that some space be left between each internal output coil 28a and its surrounding energy-magnifying coil 24 to accommodate one or more conduits of a coolant through the apparatus (at a sacrifice of some efficiency). The coolant can, be, for example, forced air (in the case of photoconductors or doped semiconductors) or liquefied cryogenic gas (in the case of superconductors).

FIG. 6 also shows two external conductors 34 connected to respective internal output coils 28a. Electrons flow through the conductors 34 and the internal output coils 28a in series. In addition, two external conductors 36 are connected to respective ends of the external output coil 28b, and two external conductors 38 are connected to respective ends of the sending coil 20.

FIG. 7 is a schematic end view of the apparatus of FIG. 6, showing the relative direction of electron flow in the various coils and in the intercoil connections described for single-layer coils. At a particular oscillation phase, the clockwise electron flow denoted by the arrow 39a in the sending coil 20 induces clockwise electron flow 39b in all the energy-magnifying coils 24. The magnified radiation from the clockwise electron flow in the energy-magnifying coils 24 induces counter-clockwise electron flow in all the internal output coils 28a, as indicated by the arrows 39c. The counter-clockwise electron flow, denoted by the arrow 39d, in the external output coil 28b is opposite in direction to the electron flow in the energy-magnifying coils 24.

The electron flow in the intercoil connectors 30a extending between adjacent energy-magnifying coils 24 is indicated by the arrows 39e, and the electron flow in the intercoil connectors 32a extending between adjacent internal output coils 28a is indicated by the arrows 39f. During the next oscillation phase, all the directional arrows shown in FIG. 7 reverse themselves.

Connecting the internal output coils 28a together in series is advantageous if it is desired to maximize the output voltage from the apparatus 15. Alternatively, the internal output coils 28a can be connected together in parallel if it is desired to maximize the output electrical current from the apparatus 15 while minimizing output voltage. In this alternative configuration, all the internal output coils 28a desirably are wound with the same handedness, with each coil 28a having two respective leads. The leads at one end (*e.g*., the foot end) of the coils 28a are connected to each other, and the leads at the other end (the head end) of the coils 28a are connected to each other. The resulting parallel-coil system is connected in a conventional manner in other circuitry of the apparatus (not shown).

Further alternatively, the internal output coils 28a can be connected together so as to provide more than one output circuit (so long as sufficient energy is produced for use as feedback to the sending coil 20 and for use in establishing conditions favorable for producing abundant low-mass electrons). The relative voltage(s) and cuffent(s) of output power alternatively can be varied by changing the ratio of the number of turns in the energy-magnifying coils 24 to the number of turns in the internal output coils 28a. Further alternatively, the energy-magnifying coils 24 can be employed in a separate manner to provide more than one energy-magnifying unit. Each unit can comprise one or more energy-magnifying coils that can serve its respective circuit of internal output coils.

The two conductors 36 connected to the external output coil 28b can be connected to the internal output coils 28a or can .be used (without being connected to the external output coils 28a) only with the external output coil 28b to provide an independent output circuit (not shown). The two conductors 38 connected to the sending coil 20 are connected in the feed-back loop 46 such that electron flow in the sending coil 20 is in the same circular direction as in the internal output coils 28a.

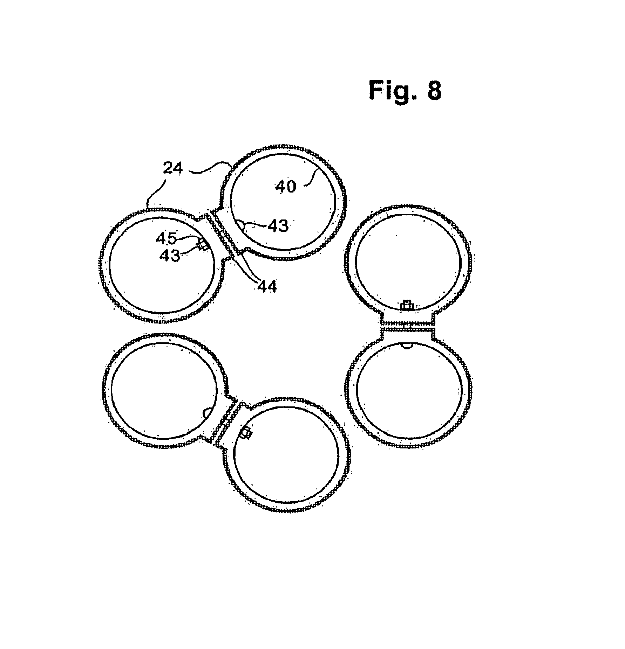

FIG. 8 depicts yet another embodiment of the apparatus 15; in which each energy-magnifying coil 24 comprises a respective thin film or thick film of a polycrystalline or other suitable photoconductor deposited in a helical manner directly onto a respective tubular substrate 40 desirably made of ceramic or other suitable dielectric material. On each energy-magnifying coil 24 the polycrystalline photoconductor is formed as a helical band on the outside of the respective tubular substrate 40. The helical band of photoconductor can include a respective thin film of metal embedded within. In certain cases, intercoil connections between adjacent energy-magnifying coils 24 can be made by extending the deposited photoconductor from the helices to respective contact areas 44 situated at ends of the tubular substrates 40 and extending toward contact areas 44 on adjacent tubular substrates 40. Electrical contact between adjacent energy-magnifying coils 24 is made under moderate pressure *via* the contact areas 44, which are shown in FIG. 8. To distinguish the individual contact areas 44, they are shown in a separated position before being pressed together to make contact. To maintain the integrity of the contact areas 44, the energy-magnifying coils 24 can be held together in mutual .proximity by any of various non-metallic fasteners to make continuous electrical contact between all the photoconductive portions. For example, bolts 43 and nuts 45 made of a plastic such as nylon or other dielectric material can be used. Another variation is to maintain contact pressure of one coil to the next by means of spring clips. Thus, in one embodiment, the energy-magnifying coils 24 are connected so as to be in endless contact with each other, with no capacitative break between them. The remainder of the apparatus can be constructed in the same manner as the photoconductor or doped-semiconductor embodiment described above, wherein the same attention to the direction of electron flow in respective coils is observed.

The coil configuration of yet another embodiment is shown in schematic end-section views in FIGS. 9(A)-9(B). A tubular substrate 40 supports a helical, thin-film or thick film, dipole-type of energy-magnifying coil 24 that is nested inside of, and coaxial with, a single external output coil 28b. Nested inside the tubular substrate 40, and with respective axes parallel to the axis of the tubular substrate 40, are a sending coil 20 and an internal output coil 28a. The sending coil 20 and the internal output coil 28a are disposed on opposite sides of a reflective metallic separator 59. The separator 59 is substantially parabolic in cross-section throughout its axial extent, and is disposed so that the longitudinal edges of the separator 59 are touching, or nearly touching, the tubular substrate 40. The separator 59 can be comprised of a common, non-magnetic metal such as aluminum or magnesium. The sending coil 20 is positioned on the concave side of the separator 59, with the axis of the sending coil 20 being positioned at the geometric focus 60 of the parabola and disposed parallel to the axis of the energy-magnifying coil 24. The energy-magnifying coil 24 in this embodiment comprises a thin-film or thick-film photoconductor formed helically on the tubular substrate 40. A photoconduction exciter 26 is disposed inside the separator 59. (The tubular substrate 40 is made of a rigid material that is transparent to radiation produced by the photoconduction exciter 26.) All the other forms of the energy-magnifying coil 24 as described herein, including the superconducting form, can be employed in this embodiment.

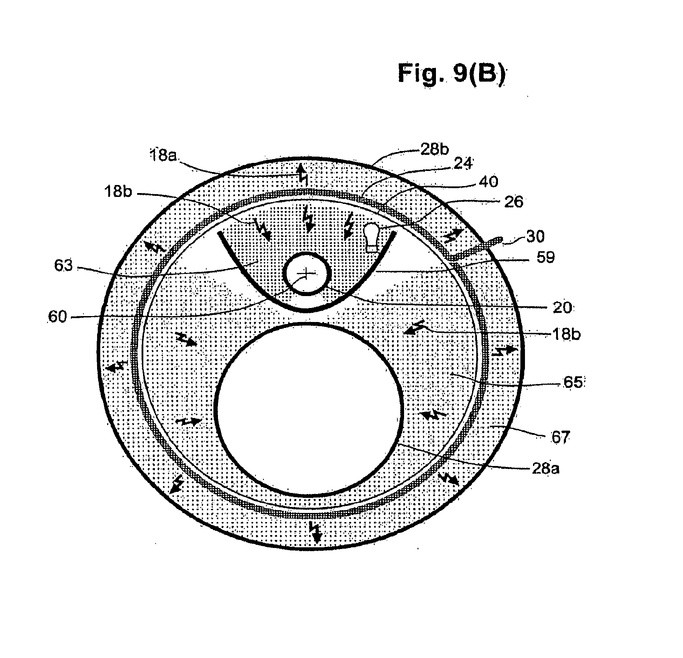

The separator 59 serves a double purpose. One purpose is to redirect toward the energy-magnifying coil 24 that portion of the inductive-photon radiation 22 that is not otherwise directed toward the separator, as shown by the reflected-photon rays 61 in FIG. 9(A). (Reflection of these radiated photons does not change the directionality of the transverse force that these photons convey.) Another purpose of the separator 59 is to serve as a shield to restrict the amount of inward radiation 18b from the energy-magnifying coil 24 that is returned as a back-force to the sending coil 20. The restricted back-force radiation is shown by the shaded area 63 in FIG. 9(B).

The portion of the inwardly directed, magnified inductive-photon radiation 18b that is received by the internal output coil 28a is denoted by the shaded area 65. The proportional amount of outwardly directed magnified radiation 18a from the energy-magnifying coil 24 that is received by the external output coil 28b is shown by the shaded area 67. The sum of the magnified radiation in the area 65 that reaches the internal output coil 28a and the magnified radiation in the area 67 that reaches the external output coil 28b substantially exceeds the magnified radiation in the area 63 (the latter serving as a back-force on the sending coil 20). This excess of utilized energy over the back-force energy provides energy leverage. This embodiment also includes a starting mechanism, an initial power source for the photoconduction exciter, a work loop, and a feed-back loop (not shown) as provided in the other embodiments described herein.

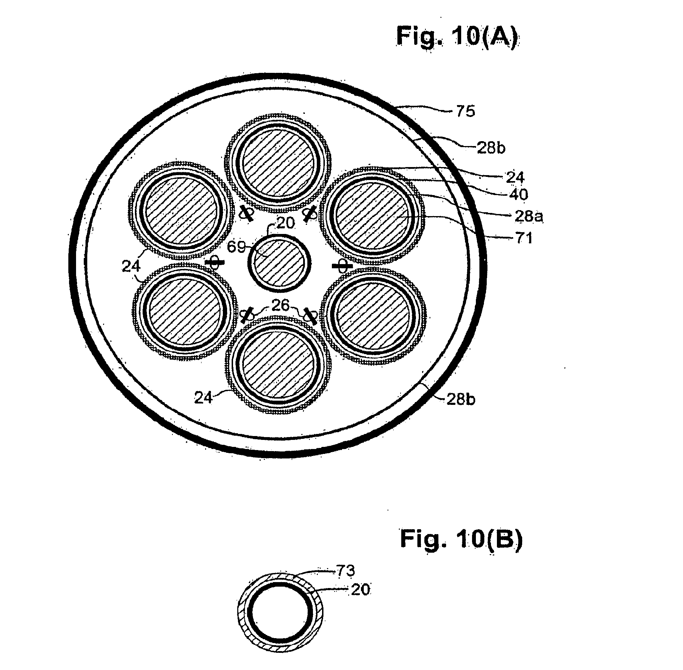

Certain features can be incorporated with any of the embodiments described herein to add functional practicality. For example, referring to the schematic representation of a coil configuration shown in end view in FIG. 10(A), a ferromagnetic core 69 can be disposed inside the sending coil 20, and ferromagnetic cores 71 can be disposed inside respective internal output coils 28a. These cores increase the inductance of the apparatus, which lowers the frequency of the electrical oscillations produced by the apparatus. Although increases in inductance can cause the output voltage and current to be out of phase, the phase difference can be corrected by adding capacitance to the circuitry by conventional means. Also shown is an external metal shield that completely surrounds the apparatus to block any radiation from the device that could interfere with radios, televisions, telephones, computers, and other electronic devices. The shield can be comprised of any of various non-magnetic metals such as aluminum or magnesium.

An alternative means of increasing the inductance of the apparatus is shown in FIG. 10(B), which is a variation of the end view just of the sending coil 20 that is depicted in FIG. 10(A). In FIG. 10(B), a ferromagnetic sleeve 73 is disposed coaxially around the sending coil 20.

The respective dimensional ratios of various components generally remain similar with respect to each other for different apparatus sizes, except for the longitudinal dimension, which generally can be as short or long as desired up to some practical limit. The respective gauges of wires used in the sending coil 20 and the output coils 28a, 28b are commensurate with the electric current carried by these wires, and the respective thicknesses of insulation (if used) on the wires are commensurate with the voltage.

The outside diameter of the internal output coils 28a desirably is only slightly less than the inside diameter of the respective energy-magnifying coils 24, as shown in FIGS. 6, 7, and 8, thereby ensuring close proximity of each internal output coil 28a with its respective energy-magnifying coil 24. At a sacrifice in efficiency, the outside diameter of the internal output coils 28a can be made smaller to allow space for heat from the current-carrying wires to escape or be removed by a coolant such as forced air, in the case of a photoconductor-type or doped-semiconductor-type apparatus, or by a cryogenic liquefied gas in the case of a superconductor-type apparatus.

Also desirably, the external output coil 28b is connected in series with the internal output coils 28a to maximize the output voltage from the apparatus 15 and to minimize heat produced by the electric currents in the apparatus, The output voltage can be stepped down and the output electrical current can be stepped up to normal respective operating ranges using a transformer, wherein the primary of the transformer would comprise the load in the work loop 48.

As discussed above, each energy-magnifying coil 24 can comprise a photoconductor or doped semiconductor formed as a helical pattern on a respective thinwalled, tubular substrate provided with extended, raised contact surfaces at each end. The energy-magnifying coils 24 desirably are connected electrically (rather than capacitatively) to each other in series at the raised contact surfaces. The photoconductive coils desirably are coated using clear varnish or enamel to provide electrical insulation and to protect the photoconductors from oxidation and weathering.

Where the low-mass photoconducting electrons in the energy-multiplying coils 24 are present in a concentration that is insufficient for capturing most of the inductive-photon radiation from the sending coil 20, each energy-magnifying coil desirably includes a very thin metallic band. The metal desirably is in intimate contact with the low-mass-electron carrier. The metal can be on the exterior of a doped semiconductor, or it can be embedded in a photoconductor band of the coil to capture the inductive radiation and set up an electric field that, in turn, assists in accelerating the low-mass electrons. In the photoconductive embodiment the photoconductive material desirably is disposed all around the metallic band so that the low-mass electrons are conducted on the outer side as well as the inner side and edges of the photoconductive band on the portion or portions that are exposed to illumination on the outside. The width of the metal band desirably is sufficient to capture as much of the inductive-photon radiation from the sending coil as practical, since gaps between turns of the metal band in the energy-magnifying coil permit the sending coil's inductive radiation to pass through to the internal output coil. Since the sending-coil's radiation is a half-cycle out of phase with the inductive radiation from the low-mass electrons, all the sending-coil radiation that reaches the output coil reduces the output efficiency of the apparatus.

Appropriate photoconductive materials (*e.g*., cadmium sulfide, cadmium selenide) for forming the energy-magnifying coils 24 are commercially available. The photoconductive material can be a single material or a mixture of materials, and can be formed by, for example, sputtering. A mixture of cadmium sulfide and cadmium selenide can be adjusted optimally to yield energy-magnifying coils exhibiting maximal energy-magnifying factors at a peak wavelength matching the brightest photoconduction exciters 26 that are available.

With respect to the photoconduction exciters 26, photo-excitation of the energy-magnifying coils 24 can be provided by one or more light-emitting diodes (LEDs; either surface-emitting or edge-emitting), for example, selected to produce an output wavelength matched to the peak photoconduction wavelength of the energy-magnifying coils 24. In the embodiments of FIGS. 7 and 10(A), individual LEDs 26 are disposed in linear arrays mounted back-to-back on respective mounting bars. The assembled mounting bars with LEDs are disposed in the gaps between adjacent energy-magnifying coils 24 to illuminate at least the sides of the respective energy-magnifying coils 24 that receive inductive-photon radiation from the sending coil 20. LEDs are advantageous compared to incandescent lamps because LEDs produce more light with less heat than incandescent lamps, and have much longer operational lifetimes than incandescent lamps. LEDs also are preferred because of their small size, which facilitates fitting a large number of them into the relatively small space between adjacent energy-magnifying coils 24.

Whereas the invention has been described in connection with several representative embodiments, the invention is not limited to those embodiments. On the contrary, the invention is intended to encompass all modifications, alternatives, and equivalents as may be included within the spirit and scope of the invention, as defined by the appended claims.

### References Cited in Text

Helmholtz, H., 1847, Über die'Erhaltwig der Kraft, G.A. Reimer, Berlin. On the Conservation of Force, English translation with Appendices of 1881, Wesleyan University Press, Middletown CT, 1971.
Leimer, E., 1915, "Über Radiumantennen," *Elektrotechnische Zeitschrift,* Heft 8, Feb. 25, 1915. English Translation: "On Radium Antennae," The Electrician, April 21, 1916, and "Radium and Aerials," Scientific American, Supplement No. 2127., Oct. 7, 1916.
Anon., 1919a, "Youthful Seattle Inventor and His Invention" (photos and captions), Seattle Post-Intelligencer, Dec. 17, 1919.
Anon., 1919b, "Youth's Revolutionary Invention is Backed By Professor-Hubbard's New Energy No Fake, Says Seattle College Man," Seattle Post-Intelligencer, Dec. 17, 1919.
Anon., 1920a, "Hubbard Coil Runs Boat on Portage Bay Ten Knots an Hour; Auto Test Next," Seattle Post-Intelligencer, July 29, 1920.
Anon., 1920b, "Drives Boat with New Electric Generator" (photos and captions), Seattle Post-Intelligencer, July 29, 1920.
Anon., 1928a, "Noted Flyers Try Out New Motor at Selfridge Field" (photo), Detroit Free Press, Feb. 25, 1928.
Anon., 1928b, "Fuelless Motor Shown; Gets Current From Air," Detroit Free Press, Feb. 25, 1928.
White, H.C., 1928c, "Lindbergh Tries Motor Earth Runs," Detroit Free Press, Feb. 25, 1928.
Anon., 1928d, "Fuelless Motor Impresses Experts," New York Times, Feb. 26, 1928.
Anon., 1928e, "No-Fuel Motor Finds Backers," Detroit News, Feb. 26, 1928.
Anon., 1928f, "'Fuelless Motor' Is a Generator," New York Times, Feb. 27, 1928.
Anon., 1928g, "Fuelless Motor Ends 2-year Task," Seattle Post-Intelligencer, Feb. 27, 1928.
Bermann, R.B., 1928h, "Hubbard Believes Mystery Motor Based Upon His Own Invention," Seattle Post-Intelligencer, Feb. 27, 1928.
Ampere, A.M., 1820, "Memoire," Annales de Chimie et de Physique*.*
Ampere, A.M., 1825, "Memoire," Annales de Chimie et de Physique*.*
Weber, W., 1846, Elektrodynamische Maassbestimmungen, Weidmann'sche Buchhandlung, Leipzig.
Gauss, C.F., 1835, unpublished notes originally published posthumously in 1865 as "Grundgesetz Für Alle Wechselwirkungen Galvanischer Strome," in Werke, Vol. 5, pp. 616-620; the correspondence from Gauss to Wilhelm Weber (1845) is on pp. 627-629.
Maxwell, J.C., 1873, A Treatise on Electricity and Magnetism, Clarendon Press, Oxford.
Larmor, J., 1897, "On the Theory of Magnetic Influence of Spectra; and on the Radiation From Moving Ions," Phil. Mag LXIII:503-512**.**
Larmor, J., 1900, Aether and Matter, Cambridge University Press.
Rutherford, E., 1911, Phil. Mag. XXI:669.
Planck, M., 1911, Verh. D. Deutsch. Phys. Ges. XIII:138.
Bohr, N., Kramers, H.A., and Slater, J.C., 1924, Phil. Mag. XLVII:785.
Whittaker, E. 1951, A History of the Theories of Aether and Electricity, Thos. Nelson & Sons, London; reprinted by Dover, New York, 1989.
Shpenkov, G.P. and Kreidik, L.G., "Microwave Background Radiation of Hydrogen Atoms," Revista Ceencias Exastas e Naturais 4, n.1, pp. 9-18, Jan/Jun 2002.,
Fowler, W. A., 1983, "Experimental and Theoretical Nuclear Astrophysics; the Quest for the Origin of the Elements," Nobel Lecture, Dec. 8, 1983.
Tifft, W.G., 1976, "Discrete States of Redshift and Galaxy Dynamics I," Astrophysical Journal 206:38-56.
Tifft, W.G., 1977, "Discrete States of Redshift and Galaxy Dynamics II: Systems of Galaxies," Astrophysical Journal 211:31-46; and "Discrete States of Redshift and Galaxy Dynamics III: Abnormal Galaxies," Astrophysical Journal 211:377-391.
Compton, A.H. and Allison, S.K., 1935, "X-Rays in Theory and Experiment," 2d Ed., Van Nostrand, New York.
Pops, H., 1997, "The Metallurgy of Copper Wire," Innovations, Dec. 1997 (Copper Development Assoc.).
Lapp, R.E. and Andrews, H.L., 1954, Nuclear Radiation Physics, Prentice-Hall, Englewood Cliffs, N.J.
Bardeen, J., 1941, "Theory of Superconductivity" (abstr.), Phys. Rev. 59:298.
Dehmelt, H.G., 1989, "Experiments with an Isolated Subatomic Particle at Rest," Nobel Lecture, Dec. 8, 1989.
File, J. and Mills, R.G., 1963, "Observation of Persistent Current in a Superconducting Solenoid," Phys. Rev. Lett. 10(3), Feb. 1, 1963.

The following passages are the claims from the original application PCT/US2007/004902 as filed, which forms the parent application to this divisional application, and are included here as a precaution to ensure completeness of disclosure. The claims of this divisional application follow.
1. An apparatus for generating an electrical current, comprising:
   at least one sending coil in which an electrical oscillation causes radiation of inductive photons from the sending coil;
   at least one energy-magnifying coil situated relative to the sending coil to receive inductive photons from the sending coil, the energy-magnifying coil comprising a material that produces, in a condition, low-mass electrons, wherein the inductive photons received by the energy-magnifying coil impart respective transverse forces to the low-mass electrons that cause the low-mass electrons to experience accelerations in the energy-magnifying coil that are greater than accelerations that otherwise would be experienced by normal free electrons experiencing the transverse forces, the accelerated low-mass electrons producing an inductive force;
   means for establishing the condition with respect to the energy-magnifying coil;
   at least one first output coil inductively coupled to the energy-magnifying coil to provide an oscillating electrical output in response to the inductive force produced by the energy-magnifying coil, the oscillating electrical output being usable to drive a load; and
   a feed-back connection from the first output coil to the sending coil that provides the sending coil with the electrical oscillations from the oscillating electrical output.
2. The apparatus of clause 1, wherein the energy-magnifying coil is situated adjacent the sending coil.
3. The apparatus of clause 1, wherein the sending coil and first output coil are nested inside and axially parallel to the energy-magnifying coil.
4. The apparatus of clause 3, further comprising a reflective, metallic, nonmagnetic separator plate situated between the sending coil and the first output coil.
5. The apparatus of clause 4, wherein:
   the separator plate has a substantially parabolic profile with a geometric focus line; and
   the sending coil extends axially along the geometric focus line of the separator plate.
6. The apparatus of clause 5, further comprising a second output coil substantially surrounding the energy-magnifying coil.
7. The apparatus of clause 1, wherein the energy-magnifying coil is oriented substantially parallel to the sending coil.
8. The apparatus of clause 1, wherein the first output coil is nested inside the energy-magnifying coil.
9. The apparatus of clause 1, wherein the accelerations of the low-mass electrons in the energy-magnifying coil cause the inductive force produced by the energy- magnifying coil to have a greater magnitude than otherwise would be produced in the energy-magnifying coil by normal free electrons accelerated by the transverse forces.
10. The apparatus of clause 1, further comprising means for conducting at least a portion of the alternating electrical output from the first output coil to a point of use.
11. The apparatus of clause 10, wherein said means for conducting comprises a work loop connected to the first output coil.
12. The apparatus of clause 1, wherein:
   the material of the energy-magnifying coil comprises a superconducting material; and
   the condition is a temperature at which the superconducting material exhibits superconducting behavior characterized by production of low-mass electrons.
13. The apparatus of clause 12, wherein the energy-magnifying coil comprises a coil of superconducting wire.
14. The apparatus of clause 12, wherein the energy-magnifying coil comprises a coil made up of turns of a ribbon of superconducting material.
15. The apparatus of clause 12, wherein said means for establishing the condition comprises means for establishing a cryogenic condition for the superconducting material of the energy-magnifying coil.
16. The apparatus of clause 1, wherein:
   the material of the energy-magnifying coil comprises a photoconductive material; and
   the condition is a situation in which the photoconductive material is illuminated by a wavelength of electromagnetic radiation sufficient to cause the photoconductive material to produce low-mass electrons.
17. The apparatus of clause 16, wherein the photoconductive material is selected from the group consisting of indium phosphide, gallium antimonide, cadmium-tin arsenide, cadmium sulfide, cadmium selenide, cadmium arsenide, gallium arsenide, mercury selenide, indium arsenide, mercury telluride, and indium antimonide, and mixtures thereof.
18. The apparatus of clause 16, wherein said means for establishing the condition comprises a photoconduction exciter situated and configured to illuminate at least a portion of the photoconductive material of the energy-magnifying coil with the wavelength of electromagnetic radiation.
19. The apparatus of clause 18, wherein the photoconductive material comprises a formulation of one or more photoconductive compounds that, in the formulation, has a peak response wavelength tailored for the wavelength of the electromagnetic radiation produced by the photoconduction exciter.
20. The apparatus of clause 18, wherein the photoconduction exciter comprises at least one light-emitting diode situated relative to the energy-magnifying coil.
21. The apparatus of clause 18, wherein the photoconductive material and the photoconduction exciter comprise at least one similar material so as to excite the photoconductive material with a wavelength of electromagnetic radiation that is substantially the same as a wavelength of electromagnetic radiation required for photoconductive excitation of the photoconductive material.
22. The apparatus of clause 18, wherein the photoconduction exciter comprises at least one incandescent source of electromagnetic radiation.
23. The apparatus of clause 18, wherein the photoconduction exciter comprises at least one gas-discharge lamp.
24. The apparatus of clause 18, wherein the wavelength of electromagnetic radiation is selected from a wavelength range extending from radio waves to UV rays.
25. The apparatus of clause 16, wherein the energy-magnifying coil comprises a coil made up of turns of a ribbon comprising photoconductive material.
26. The apparatus of clause 25, wherein the ribbon comprises a metal ribbon coated on all sides with a photoconductive material.
27. The apparatus of clause 16, wherein the energy-magnifying coil comprises a coil made up of turns of a film of photoconductive material formed on and extending around a tubular substrate.
28. The apparatus of clause 1, wherein the material of the energy-magnifying coil comprises a doped semiconductor.
29. The apparatus of clause 1, wherein the feed-back connection conducts sufficient electrical power to the sending coil for self-sustaining operation of the apparatus without providing energy to the apparatus from an external source.
30. The apparatus of clause 1, further comprising:
   multiple energy-magnifying coils arranged in an array relative to the sending coil, each energy-magnifying coil being situated relative to a respective portion of the sending coil and configured to receive a respective share of the inductive photons radiating from the sending coil; and
   a respective internal output coil nested inside and inductively coupled to each energy-magnifying coil.
31. The apparatus of clause 30, wherein the energy-magnifying coils in the array are arranged substantially parallel to the sending coil.
32. The apparatus of clause 30, wherein:
   the energy-magnifying coils are connected together in series; and
   the internal output coils are connected together in series.
33. The apparatus of clause 30, further comprising an external output coil in surrounding relationship to the array of energy-magnifying coils, the external output coil being situated relative to, and inductively coupled to, the energy-magnifying coils so as to receive respective portions of photon radiation from the energy-magnifying coils.
34. The apparatus of clause 33, wherein the external output coil is electrically connected in series with the internal output coils.
35. The apparatus of clause 33, wherein:
   the internal output coils are electrically connected to a first output circuit; and
   the external output coil is electrically connected to a second output circuit that is substantially independent of the first output circuit.
36. The apparatus of clause 30, wherein:
   at least one of the internal output coils is electrically connected to a first output circuit; and
   at least one of the other internal output coils is electrically connected to a second output circuit that is substantially independent of the first output circuit.
37. The apparatus of clause 30, wherein the energy-magnifying coils are wound such that, when the coils are viewed endwise, electron flow is in a same direction, clockwise or counterclockwise, at any particular instant in time during operation of the apparatus.
38. The apparatus of clause 30, wherein:
   the energy-magnifying coils are electrically connected to each other; and
   the energy-magnifying coils are situated adjacent each other in a manner facilitating electrical contact from one energy-magnifying coil to the next.
39. The apparatus of clause 38, wherein each energy-magnifying coil comprises at least one contact surface used for making electrical contact with a corresponding contact surface on an adjacent energy-magnifying coil.
40. The apparatus of clause 30, wherein the energy-magnifying coils are electrically connected in series with each other.
41. The apparatus of clause 30, wherein the internal output coils are electrically connected in series with each other.
42. The apparatus of clause 30, wherein the internal output coils are electrically connected in parallel with each other.
43. The apparatus of clause 1, wherein the sending coil comprises a ferromagnetic core.
44. The apparatus of clause 1, wherein the sending coil comprises a ferromagnetic cylinder extending coaxially with the sending coil.
45. The apparatus of clause 44, wherein the internal output coil comprises a ferromagnetic core.
46. The apparatus of clause 1, further comprising an external energy-input source configured to provide an initiating oscillation to either the sending coil or the feedback connection, the initiating oscillation being sufficient to trigger self oscillation of the apparatus without requiring further oscillations from the external energy-input source.
47. An apparatus for generating an electrical current, comprising:
   a sending coil in which an electrical oscillation causes radiation of inductive photons from the sending coil;
   multiple energy-magnifying coils arranged substantially parallel to and in surrounding relationship to the sending coil, each energy-magnifying coil being situated sufficiently adjacent the sending coil to receive a respective share of inductive photons radiating from the sending coil, each energy-magnifying coil comprising a material that produces, in a condition, low-mass electrons, wherein the respective share of inductive photons received by each energy-magnifying coil imparts respective transverse forces to the low-mass electrons that cause the low-mass electrons to experience accelerations in the respective energy-magnifying coil that are greater than accelerations that otherwise would be experienced by normal free electrons experiencing the respective transverse forces, the respective accelerated low-mass electrons producing a respective inductive force;
   means for establishing the condition with respect to the energy-magnifying coils;
   a respective internal output coil nested inside each of the energy-magnifying coils to provide a respective oscillating electrical output in response to the respective inductive force produced by the respective energy-magnifying coil; and
   a feed-back connection from one or more of the internal output coils to the sending coil so as to provide, from the respective one or more oscillating electrical outputs, the sending coil with the electrical oscillations.
48. The apparatus of clause 47, wherein the material of the energy-magnifying coil comprises a doped semiconductor.
49. The apparatus of clause 47, wherein:
   the material of the energy-magnifying coil comprises a superconducting material; and
   the condition is a temperature at which the superconducting material exhibits superconducting behavior characterized by production of the low-mass electrons.
50. The apparatus of clause 47, wherein:
   the material of the energy-magnifying coil comprises a photoconductive material; and
   the condition is a situation in which the photoconductive material is illuminated by a wavelength of electromagnetic radiation sufficient to cause the photoconductive material to produce the low-mass electrons.
51. The apparatus of clause 50, wherein said means for establishing comprises a photoconduction exciter situated and configured to illuminate the photoconductive material with the wavelength of electromagnetic radiation.
52. The apparatus of clause 47, wherein the feed-back connection conducts sufficient electrical power to the sending coil for self-sustaining operation of the apparatus without providing energy to the apparatus from an external source.
53. The apparatus of clause 47, wherein:
   the energy-magnifying coils are connected together in series; and
   the internal output coils are connected together in series.
54. The apparatus of clause 47, further comprising an external output coil in surrounding relationship to the array of energy-magnifying coils, the external output coil being situated relative to, and inductively coupled to, the energy-magnifying coils so as to receive respective portions of photon radiation from the energy-magnifying coils.
55. The apparatus of clause 47, wherein:
   the energy-magnifying coils are electrically connected to each other; and
   the energy-magnifying coils are situated adjacent each other in a manner facilitating electrical contact from one energy-magnifying coil to the next.
56. An apparatus for generating an electrical current, comprising:
   first oscillation means energizable by a first electrical oscillation in a manner that causes the first oscillation means to radiate inductive photons;
   second oscillation means situated relative to the first oscillation means to receive inductive photons radiated from the first oscillation means, the second oscillation means comprising a material that produces low-mass electrons, wherein the inductive photons received by the second oscillation means impart respective transverse forces to the low-mass electrons that accelerate the low-mass electrons more greatly than otherwise would be experienced by normal free electrons subjected to the transverse forces, the accelerated low- mass electrons producing an inductive force; and
   output means inductively coupled to the second oscillation means so as to produce an oscillating electrical output in response to the inductive force produced by the second oscillation means, the oscillating electrical output being usable to drive a load.
57. The apparatus of clause 56, wherein the material that produces low-mass electrons is selected from the group consisting of superconductors, photoconductors, and doped semiconductors.
58. The apparatus of clause 56, wherein the inductive force produced by the accelerated low-mass electrons is amplified according to an energy-leverage factor that is proportional to a ratio of mass of normal free electron to mass of a low-mass electron.
59. The apparatus of clause 56, further comprising means for causing the material that produces low-mass electrons to produce said low-mass electrons.
60. The apparatus of clause 59, wherein:
   the material that produces low-mass electrons comprises a photoconductor;
      and
   the means for causing production of low-mass electrons comprises a source of illumination situated and configured to direct an electromagnetic radiation at the second oscillation means.
61. The apparatus of clause 59, wherein:
   the material that produces low-mass electrons comprises a superconductor;
      and
   the means for causing production of low-mass electrons comprises means for establishing a sub-critical temperature of the second oscillation means.
62. An apparatus for generating an electrical current, comprising:
   a sending coil in which an electrical oscillation causes radiation of inductive photons from the sending coil;
   an energy-magnifying coil situated sufficiently adjacent the sending coil to receive inductive photons radiating from the sending coil, the energy-magnifying coil comprising a material that produces, in a condition, low-mass electrons, wherein the inductive photons received by the energy-magnifying coil impart respective transverse forces to the low-mass electrons that cause the low-mass electrons to experience accelerations in the energy- magnifying coil that are greater than accelerations that otherwise would be experienced by normal free electrons experiencing the transverse forces, the accelerated low-mass electrons producing an inductive force;
   an output coil inductively coupled to the energy-magnifying coil to provide an oscillating electrical output in response to the inductive force produced by the energy-magnifying coil, the oscillating electrical output being usable to drive a load; and
   a feed-back connection from the output coil to the sending coil so as to provide, from the oscillating electrical output, the sending coil with the electrical oscillations.
63. An apparatus for generating an electrical current, comprising:
   a sending coil in which an electrical oscillation causes radiation of inductive photons from the sending coil;
   an energy-magnifying coil situated sufficiently adjacent the sending coil to receive inductive photons radiating from the sending coil, the energy-magnifying coil comprising a material that produces, in a condition, low-mass electrons, wherein the inductive photons received by the energy-magnifying coil impart respective transverse forces to the low-mass electrons that cause the low-mass electrons to experience accelerations in the energy- magnifying coil that are greater than accelerations that otherwise would be experienced by normal free electrons experiencing the transverse forces, the accelerated low-mass electrons producing an inductive force;
   means for establishing the condition with respect to the energy-magnifying coil; and
   an output coil inductively coupled to the energy-magnifying coil to provide an oscillating electrical output in response to the inductive force produced by the energy-magnifying coil, the oscillating electrical output being usable to drive a load.
64. An apparatus for generating electrical current, comprising:
   a sending coil in which an electrical oscillation causes radiation of inductive photons from the sending coil;
   an energy-magnifying coil situated sufficiently adjacent the sending coil to receive inductive photons radiating from the sending coil, the energy-magnifying coil comprising a material that produces, in a condition, low-mass electrons, wherein the inductive photons received by the energy-magnifying coil impart respective transverse forces to the low-mass electrons that cause the low-mass electrons to experience accelerations in the energy-magnifying coil that are greater than accelerations that otherwise would be experienced by normal free electrons experiencing the transverse forces, the accelerated low-mass electrons producing an inductive force;
   an internal output coil inductively coupled to the energy-magnifying coil to provide a first oscillating electrical output in response to the inductive force produced by the energy- magnifying coil; and
   an external output coil inductively coupled to the energy-magnifying coil to provide a second oscillating electrical output in response to the inductive force produced by the energy-magnifying coil.
65. The apparatus of clause 64, wherein the first and second oscillating electrical outputs are connected together in series.
66. An apparatus for generating an electrical current, comprising:
   oscillation-sending means energizable by an electrical oscillation in a manner causing radiation of inductive photons from the oscillation-sending means;
   energy-magnifying means situated relative to the oscillation-sending means to receive inductive photons radiated from the oscillation-sending means, the energy-magnifying means including a coil comprising a material that, when irradiated by the photons, produces a greater inductive force than otherwise would be produced by normal free electrons in an otherwise similar coil, lacking the material, irradiated by the inductive photons; and
   output means inductively coupled to the energy-magnifying means so as to produce an oscillating electrical output in response to the greater inductive force.
67. The apparatus of clause 66, wherein at least a portion of the oscillating electrical output is fed back to the oscillation-sending means to provide the electrical oscillation so as to cause a self-resonant operation of the apparatus.
68. The apparatus of clause 66, further comprising means for initiating the electrical oscillation in the oscillation-sending means.
69. The apparatus of clause 68, wherein at least a portion of the oscillating electrical output is fed back to the oscillation-sending means to provide the electrical oscillation so as to cause a self-resonant operation of the apparatus.
70. The apparatus of clause 66, wherein the output means receives more electrical energy from the energy-magnifying means than is returned as a back-force from the output means to the energy-magnifying means.
71. The apparatus of clause 66, further comprising energy-input means situated and configured to enhance production of the greater inductive force by the energy- magnifying means.
72. The apparatus of clause 71, wherein:
   the material in the coil of the energy-magnifying means comprises a photoconductor that produces low-mass electrons when illuminated by at least one selected wavelength of electromagnetic radiation; and
   the energy-input means comprises a source of the at least one wavelength of the electromagnetic radiation.
73. The apparatus of clause 66, wherein the material in the coil of the energy- magnifying means comprises a doped semiconductor or a superconductor.
74. A method for generating an electrical current, comprising:
   energizing a first coil with an electrical oscillation sufficient to cause the sending coil to radiate inductive photons;
   receiving at least some of the radiated inductive photons with a second coil comprising a material that produces low-mass electrons, wherein the received inductive photons impart respective transverse forces to the low-mass electrons that cause the low- mass electrons to experience accelerations in the material that are greater than accelerations that otherwise would be experienced by normal free electrons experiencing the transverse forces, wherein conduction of the accelerated low-mass electrons in the second coil causes the second coil to produce a magnified inductive force; and
   receiving the magnified inductive force by a third coil so as to cause the third coil to produce an oscillating electrical output.
75. The method of clause 74, further comprising directing at least a portion of the oscillating electrical output as feed-back from the third coil to the first coil so as to provide the electrical oscillation to the first coil.
76. The method of clause 75, wherein the portion of the oscillating electrical current directed to the first coil is sufficient to cause self-sustaining generation of inductive photons by the first coil without an external energy source.
77. The method of clause 74, further comprising the step of directing the oscillating electrical output from the third coil to a work loop.
78. The method of clause 74, wherein the step of receiving the radiated inductive photons comprises receiving the radiated inductive photons with the second coil in which the material is a superconducting material.
79. The method of clause 74, further comprising the step of maintaining the superconducting material at a temperature at which the superconducting material exhibits superconductive behavior.
80. The method of clause 74, wherein the step of receiving the radiated inductive photons comprises receiving the radiated photons with the second coil in which the material is a photoconductive material.
81. The method of clause 80, further comprising the step of illuminating the photoconductive material with a wavelength of electromagnetic radiation sufficient to cause the photoconductive material to produce the low-mass electrons.
82. The method of clause 74, wherein the step of receiving the radiated inductive photons comprises receiving the radiated photons with the second coil in which the material is a doped semiconductor material.
83. The method of clause 74, wherein the step of receiving the magnified inductive force comprises:
   situating the third coil internally of the second coil; and
   collecting inwardly directed components of the magnified inductive force using the third coil.
84. The method of clause 83, further comprising the steps of:
   situating a fourth coil externally of the second coil and third coil; and
   collecting outwardly directed components of the magnified inductive force using the fourth coil.
85. The method of clause 74, wherein the step of receiving the radiated inductive photons comprises receiving the inductive photons at multiple second coils each comprising the material that produces low-mass electrons, the multiple second coils being arranged so as to receive a respective population of inductive photons radiated from the first coil.
86. The method of clause 85, wherein the step of receiving the magnified inductive force comprises: situating a respective third coil internally of each second coil; and collecting inwardly directed components of the magnified inductive force using the third coils.
87. The method of clause 86, further comprising the step of collecting outwardly directed components of the magnified inductive force.
88. The method of clause 87, wherein the collecting step is performed using a fourth coil situated externally of the second coils and third coils.
89. The method of clause 74, further comprising the step of starting the energization of the first coil to commence generation of the oscillating electrical output.
90. The method of clause 89, wherein the step of starting comprises momentarily exposing the first coil to an external oscillating inductive force.
91. The method of clause 89, wherein the step of starting comprises momentarily exposing the first coil to an external magnetic force.

## Claims

1. An apparatus for generating electrical current, comprising:
first oscillation means energizable by a first electrical oscillation in a manner that causes the first oscillation means to radiate inductive photons;
second oscillation means situated relative to the first oscillation means to receive inductive photons radiated from the first oscillation means, the second oscillation means comprising a material that produces, in a condition, low-mass electrons, wherein the inductive photons received by the second oscillation means impart respective transverse forces to the low-mass electrons that accelerate the low-mass electrons, the accelerated low-mass electrons producing an inductive force; and
output means inductively coupled to the second oscillation means so as to produce an oscillating electrical output in response to the inductive force produced by the second oscillation means, the oscillating electrical output being usable to drive a load.

2. The apparatus of claim 1, wherein:
said first oscillation means comprises at least one first coil;
said second oscillation means comprises at least one second coil; and
said output means comprises at least one first output coil.

3. The apparatus of claim 2, wherein the first coil and the first output coil are situated inside and axially parallel to a respective second coil.

4. The apparatus of any one of claims 2-3, further comprising a second output coil inductively coupled to the second coil.

5. The apparatus of any one of claims 2-4, wherein the first output coil is nested inside the second coil.

6. The apparatus of any one of claims 2-5, wherein:
the second coil comprises a superconductive material, and the condition is a temperature at which the superconductive material exhibits superconducting behavior; or
the second coil comprises a photoconductive material, and the condition is a situation in which the photoconductive material is illuminated by at least one wavelength of electromagnetic radiation sufficient to cause the photoconductive material to produce low-mass electrons; or
the second coil comprises a doped semiconductor material.

7. The apparatus of any one of claims 2-6, further comprising:
multiple second coils arranged in an array relative to the at least one first coil, each second coil being situated relative to a respective portion of the first coil and configured to receive a respective share of the inductive photons radiating from the first coil; and
a respective first output coil inductively coupled to each second coil.

8. The apparatus of claim 7, wherein the multiple second coils are arranged in an array relative to the first coil, each second coil being situated relative to a respective portion of the first coil and configured to receive a respective share of the inductive photons radiating from the first coil.

9. The apparatus of any one of claims 7-8, further comprising a second output coil in surrounding relationship to the array of second coils, the second output coil being situated relative to, and inductively coupled to, the second coils so as to receive respective portions of photon radiation from the second coils.

10. The apparatus of claim 9 wherein:
the first output coils provide a first output of the apparatus; and
the second output coil provides a second output of the apparatus.

11. The apparatus of any one of claims 1-10, further comprising feed-back means for conducting at least a portion of the oscillating electrical output from said output means to said first oscillation means.

12. A method for generating an electrical current, comprising:
energizing a first coil with an electrical oscillation sufficient to cause the first coil to radiate inductive photons;
receiving at least some of the radiated inductive photons with a second coil comprising a material that produces low-mass electrons, wherein the received inductive photons impart respective transverse forces to the low-mass electrons that cause the low-mass electrons to experience accelerations in the material that are greater than accelerations that otherwise would be experienced by normal free electrons experiencing the transverse forces, wherein conduction of the accelerated low-mass electrons in the second coil causes the second coil to produce a corresponding inductive force; and
receiving the inductive force by a third coil so as to cause the third coil to produce an oscillating electrical output.

13. The method of claim 12, further comprising directing at least a portion of the oscillating electrical output as feed-back from the third coil to the first coil so as to provide the first coil with an electrical oscillation.

14. An electrical system, comprising:
current-generating means, comprising first oscillation means energizable by a first electrical oscillation in a manner that causes the first oscillation means to radiate inductive photons; second oscillation means situated relative to the first oscillation means to receive inductive photons radiated from the first oscillation means, the second oscillation means comprising a material that produces, in a condition, low-mass electrons, wherein the inductive photons received by the second oscillation means impart respective transverse forces to the low-mass electrons that accelerate the low-mass electrons, the accelerated low-mass electrons producing an inductive force; and first output means inductively coupled to the second oscillation means so as to produce an oscillating electrical output in response to the inductive force produced by the second oscillation means; and
circuit means connected to a load and to said first output means for delivering the oscillating electrical output to the load.

15. The system of claim 14, further comprising feed-back means for conducting at least a portion of the oscillating electrical output from said first output means to said first oscillation means.

16. The system of any one of claims 14-15, further comprising second output means inductively coupled to said second oscillation means for receiving respective portions of photon radiation from said second oscillation means.

17. The system of claim 16, wherein:
said circuit means comprises a first circuit portion and a second circuit portion;
said first output means is electrically connected to the first circuit portion; and
said second output means is electrically connected to the second circuit portion.
